(19)

Europäisches
Patentamt
European
Patent Office
Office européen
des brevets

(11) **EP 4 250 460 A1**

(12) **EUROPEAN PATENT APPLICATION**
published in accordance with Art. 153(4) EPC

(43) Date of publication:
**27.09.2023 Bulletin 2023/39**

(21) Application number: **21907182.6**

(22) Date of filing: **17.12.2021**

(51) International Patent Classification (IPC):
*H01M 50/454* (2021.01)  *H01M 50/457* (2021.01)
*H01M 50/417* (2021.01)  *H01M 50/403* (2021.01)
*H01M 10/052* (2010.01)  *B29C 48/21* (2019.01)
*B29C 48/00* (2019.01)  *B29C 48/08* (2019.01)
*B29C 67/20* (2006.01)

(52) Cooperative Patent Classification (CPC):
**B29C 48/00; B29C 48/08; B29C 48/21;
B29C 67/20; H01M 10/052; H01M 50/403;
H01M 50/417; H01M 50/454; H01M 50/457**

(86) International application number:
**PCT/KR2021/019349**

(87) International publication number:
**WO 2022/131878 (23.06.2022 Gazette 2022/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2020  KR 20200177908**

(71) Applicant: **Lg Chem, Ltd.
Seoul 07336 (KR)**

(72) Inventors:
• **HAN, Sung-Jae
  Daejeon 34122 (KR)**
• **LEE, Joo-Sung
  Daejeon 34122 (KR)**
• **MUN, Sung Cik
  Daejeon 34122 (KR)**

(74) Representative: **Hoffmann Eitle
Patent- und Rechtsanwälte PartmbB
Arabellastraße 30
81925 München (DE)**

(54) **POLYOLEFIN POROUS SUBSTRATE CONTAINING CROSSLINKED STRUCTURE, METHOD FOR PREPARING SAME, AND CROSSLINKED-STRUCTURE-CONTAINING SEPARATOR FOR LITHIUM SECONDARY BATTERY COMPRISING SAME**

(57)    The present disclosure relates to a crosslinked structure-containing polyolefin porous substrate having a crosslinked structure including polymer chains interconnected directly with one another, wherein the polyolefin porous substrate includes, in a height direction extending from one surface to the other surface, a first region contacted with one surface and a second region extended from the outside of the first region toward the other surface, and polyolefin contained in the first region and polyolefin contained in the second region show a difference in crosslinking degree of 10% or more. The present disclosure also relates to a method for manufacturing the crosslinked structure-containing polyolefin porous substrate. Even though the separator including the crosslinked structure-containing polyolefin porous substrate has a crosslinked structure, it shows a low shutdown temperature and a high meltdown temperature.

FIG. 1

EP 4 250 460 A1

**Description**

TECHNICAL FIELD

The present application claims priority to Korean Patent Application No. 10-2020-0177908 filed on December 17, 2020 in the Republic of Korea.

The present disclosure relates to a crosslinked structure-containing polyolefin porous substrate and a method for manufacturing the same.

The present disclosure also relates to a crosslinked structure-containing separator for a lithium secondary battery including the crosslinked structure-containing polyolefin porous substrate, and a lithium secondary battery including the same.

BACKGROUND ART

Recently, energy storage technology has been given an increasing attention. As the application of energy storage technology has been extended to energy for cellular phones, camcorders and notebook PC and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium ion permeability based on high porosity.

A polyolefin separator using a porous substrate formed of polyolefin has been used widely as the separator. However, in the case of a typical polyolefin separator, a polyethylene (PE) separator, it has a low melting point ($T_m$) and may cause ignition and explosion, when a battery is used abnormally and the battery temperature is increased to the melting point of polyethylene or higher to generate a meltdown phenomenon. The term 'meltdown temperature' means a temperature where a separator is molten completely and loses its function as an insulator between a positive electrode and a negative electrode.

To ensure the safety of a separator, the separator should have a high meltdown temperature. However, when the meltdown temperature is increased, the shutdown temperature is also increased undesirably. The term 'shutdown temperature' means a temperature at which the pores of a separator are closed, when the battery temperature is increased. If the shutdown temperature is increased, there is an increase in the temperature at which the separator is partially molten and the pores are closed to interrupt electric current, when the battery temperature is increased. Thus, there is a problem in that it is difficult to prevent an increase in the battery temperature sufficiently.

Therefore, there is still an imminent need for a technology of reducing the shutdown temperature, while increasing the meltdown temperature.

DISCLOSURE

Technical Problem

The present disclosure is designed to solve the problems of the related art, and therefore the present disclosure is directed to providing a crosslinked structure-containing polyolefin porous substrate having a high meltdown temperature and a low shutdown temperature and showing improved high-temperature safety, and a method for manufacturing the same.

The present disclosure is also directed to providing a crosslinked structure-containing separator having a high meltdown temperature and a low shutdown temperature and showing improved high-temperature safety, and a lithium secondary battery including the same.

Technical Solution

In one aspect of the present disclosure, there is provided a crosslinked structure-containing polyolefin porous substrate according to any one of the following embodiments.

According to the first embodiment, there is provided a crosslinked structure-containing polyolefin porous substrate having a crosslinked structure including polymer chains interconnected directly with one another,

wherein the polyolefin porous substrate includes, in a height direction extending from one surface to the other surface, a first region contacted with one surface and a second region extended from the outside of the first region toward the other surface, and

polyolefin contained in the first region and polyolefin contained in the second region show a difference in crosslinking degree of 10% or more.

According to the second embodiment, there is provided the crosslinked structure-containing polyolefin porous substrate as defined in the first embodiment,

which further includes a third region extended from the outside of the second region toward the other surface, and polyolefin contained in the second region and polyolefin contained in the third region show a difference in crosslinking degree of 10% or more.

According to the third embodiment, there is provided the crosslinked structure-containing polyolefin porous substrate as defined in the first or the second embodiment, wherein polyolefin contained in the first region and polyolefin contained in the second region show a difference in crosslinking degree of 20% or more.
According to the fourth embodiment, there is provided the crosslinked structure-containing polyolefin porous substrate as defined in any one of the first to the third embodiments, wherein polyolefin contained in the first region has a higher crosslinking degree as compared to polyolefin contained in the second region.
According to the fifth embodiment, there is provided the crosslinked structure-containing polyolefin porous substrate as defined in any one of the first to the fourth embodiments, wherein polyolefin contained in the first region has a crosslinking degree of 20% or more.
According to the sixth embodiment, there is provided the crosslinked structure-containing polyolefin porous substrate as defined in any one of the first to the fifth embodiments, wherein polyolefin contained in the first region has a crosslinking degree of 30% or more.
According to the seventh embodiment, there is provided the crosslinked structure-containing polyolefin porous substrate as defined in any one of the first to the sixth embodiments, wherein polyolefin contained in the second region has a crosslinking degree of 0.1-10%.
According to the eighth embodiment, there is provided the crosslinked structure-containing polyolefin porous substrate as defined in any one of the first to the seventh embodiments, wherein the first region has a thickness corresponding to 10-80% based on the total thickness of the polyolefin porous substrate.
According to the ninth embodiment, there is provided the crosslinked structure-containing polyolefin porous substrate as defined in any one of the second to the eighth embodiments, wherein polyolefin contained in the second region and polyolefin contained in the third region show a difference in crosslinking degree of 20% or more.
According to the tenth embodiment, there is provided the crosslinked structure-containing polyolefin porous substrate as defined in any one of the second to the ninth embodiments, wherein polyolefin contained in the third region has a higher crosslinking degree as compared to polyolefin contained in the second region.
According to the eleventh embodiment, there is provided the crosslinked structure-containing polyolefin porous substrate as defined in any one of the second to the tenth embodiments, wherein polyolefin contained in the third region has a crosslinking degree of 20% or more.
According to the twelfth embodiment, there is provided the crosslinked structure-containing polyolefin porous substrate as defined in any one of the second to the eleventh embodiments, wherein polyolefin contained in the third region has a crosslinking degree of 30% or more.
According to the thirteenth embodiment, there is provided the crosslinked structure-containing polyolefin porous substrate as defined in any one of the second to the twelfth embodiments, wherein the second region has a thickness corresponding to 10-60% based on the total thickness of the polyolefin porous substrate.
According to the fourteenth embodiment, there is provided the crosslinked structure-containing polyolefin porous substrate as defined in any one of the first to the thirteenth embodiments, which shows a change in puncture strength of 10% or less, as compared to the polyolefin porous substrate before crosslinking.
In another aspect of the present disclosure, there is provided a crosslinked structure-containing separator for a lithium secondary battery according to any one of the following embodiments.
According to the fifteenth embodiment, there is provided a crosslinked structure-containing separator for a lithium secondary battery including the crosslinked structure-containing polyolefin porous substrate as defined in any one of the first to the fourteenth embodiments.
According to the sixteenth embodiment, there is provided the crosslinked structure-containing separator for a lithium secondary battery as defined in the fifteenth embodiment, which further includes an inorganic composite porous layer disposed on at least one surface of the crosslinked structure-containing polyolefin porous substrate, and comprising an inorganic filler and a binder polymer.
According to the seventeenth embodiment, there is provided the crosslinked structure-containing separator for a lithium secondary battery as defined in the fifteenth embodiment, which further includes:

> an inorganic composite porous layer disposed on at least one surface of the crosslinked structure-containing polyolefin porous substrate, and comprising an inorganic filler and a first binder polymer; and
> a porous adhesive layer disposed on the inorganic composite porous layer, and comprising a second binder polymer.

According to the eighteenth embodiment, there is provided the crosslinked structure-containing separator for a lithium secondary battery as defined in any one of the fifteenth to the seventeenth embodiments, which shows a meltdown temperature of 160°C or higher.

According to the nineteenth embodiment, there is provided the crosslinked structure-containing separator for a lithium secondary battery as defined in any one of the fifteenth to the eighteenth embodiments, which shows a shutdown temperature of 146°C or lower.

In still another aspect of the present disclosure, there is provided a method for manufacturing a crosslinked structure-containing polyolefin porous substrate according to any one of the following embodiments.

According to the twentieth embodiment, there is provided a method for manufacturing the crosslinked structure-containing polyolefin porous substrate as defined in the first embodiment, including the steps of:

> (S1) preparing a first polyolefin composition containing polyolefin and a diluting agent, and a second polyolefin composition comprising polyolefin, a diluting agent and an antioxidant;
> (S2) co-extruding the first polyolefin composition and the second polyolefin composition in such a manner that the extruded product of the second polyolefin composition may be laminated on the top surface of the extruded product of the first polyolefin composition;
> (S3) molding and orienting the resultant product of step (S2) in the form of a sheet to obtain a polyolefin porous substrate;
> (S4) extracting the diluting agent from the resultant product of step (S3);
> (S5) thermally fixing the resultant product of step (S4);
> (S6) applying a photoinitiator composition comprising a photoinitiator to the resultant product of step (S5); and
> (S7) irradiating UV rays to the resultant product of step (S6),
> wherein the antioxidant is present in an amount of 0.8 parts by weight or more based on 100 parts by weight of polyolefin contained in the second polyolefin composition.

According to the twenty-first embodiment, there is provided the method for manufacturing a crosslinked structure-containing polyolefin porous substrate as defined in the twentieth embodiment, wherein the antioxidant includes a first antioxidant as a radical scavenger and a second antioxidant as a peroxide decomposer.

According to the twenty-second embodiment, there is provided the method for manufacturing a crosslinked structure-containing polyolefin porous substrate as defined in the twenty-first embodiment, wherein the first antioxidant is present in an amount of 0.5 parts by weight or more based on 100 parts by weight of polyolefin contained in the second polyolefin composition.

According to the twenty-third embodiment, there is provided the method for manufacturing a crosslinked structure-containing polyolefin porous substrate as defined in the twenty-first or the twenty-second embodiment, wherein the second antioxidant is present in an amount of 0.3 parts by weight or more based on 100 parts by weight of polyolefin contained in the second polyolefin composition.

According to the twenty-fourth embodiment, there is provided the method for manufacturing a crosslinked structure-containing polyolefin porous substrate as defined in any one of the twentieth to the twenty-third embodiments, wherein the first polyolefin composition further includes an antioxidant.

According to the twenty-fifth embodiment, there is provided the method for manufacturing a crosslinked structure-containing polyolefin porous substrate as defined in the twenty-fourth embodiment, wherein the antioxidant is present in an amount of 0.2 parts by weight or less.

According to the twenty-sixth embodiment, there is provided the method for manufacturing a crosslinked structure-containing polyolefin porous substrate as defined in the twenty-fourth or the twenty-fifth embodiment, wherein the antioxidant is present in an amount of 0.07-0.2 parts by weight.

According to the twenty-seventh embodiment, there is provided the method for manufacturing a crosslinked structure-containing polyolefin porous substrate as defined in any one of the twenty-fourth to the twenty-sixth embodiments, wherein the antioxidant contained in the first polyolefin composition includes a third antioxidant as a radical scavenger and a fourth antioxidant as a peroxide decomposer.

According to the twenty-eighth embodiment, there is provided the method for manufacturing a crosslinked structure-containing polyolefin porous substrate as defined in the twenty-seventh embodiment, wherein the third antioxidant is present in an amount of 0.05-0.1 parts by weight based on 100 parts by weight of polyolefin contained in the first polyolefin composition.

According to the twenty-ninth embodiment, there is provided the method for manufacturing a crosslinked structure-containing polyolefin porous substrate as defined in the twenty-seventh or the twenty-eighth embodiment, wherein the fourth antioxidant is present in an amount of 0.02-0.1 parts by weight based on 100 parts by weight of polyolefin contained in the first polyolefin composition.

According to the thirtieth embodiment, there is provided the method for manufacturing a crosslinked structure-containing polyolefin porous substrate as defined in any one of the twentieth to the twenty-ninth embodiments, wherein step (S2) includes carrying out co-extrusion in such a manner that the extruded product of the first polyolefin composition, the extruded product of the second polyolefin composition and the extruded product of the first polyolefin composition may be laminated.

According to the thirty-first embodiment, there is provided the method for manufacturing a crosslinked structure-containing polyolefin porous substrate as defined in any one of the twentieth to the thirtieth embodiments, wherein the photoinitiator includes a Type 2 photoinitiator.

According to the thirty-two embodiment, there is provided the method for manufacturing a crosslinked structure-containing polyolefin porous substrate as defined in any one of the twentieth to the thirty-first embodiments, wherein the photoinitiator includes thioxanthone (TX), a thioxanthone derivative, benzophenone (BPO), a benzophenone derivative, or two or more of them.

According to the thirty-third embodiment, there is provided the method for manufacturing a crosslinked structure-containing polyolefin porous substrate as defined in any one of the twentieth to the thirty-second embodiments, wherein the amount of the photoinitiator is 0.01-0.5 wt% based on 100 wt% of the photoinitiator composition.

According to the thirty-fourth embodiment, there is provided the method for manufacturing a crosslinked structure-containing polyolefin porous substrate as defined in any one of the twenty-first to the thirty-third embodiments, wherein the first antioxidant includes a phenolic antioxidant, an amine-based antioxidant, or a mixture thereof.

According to the thirty-fifth embodiment, there is provided the method for manufacturing a crosslinked structure-containing polyolefin porous substrate as defined in any one of the twenty-first to the thirty-fourth embodiments, wherein the second antioxidant includes a phosphorus-based antioxidant, a sulfur-based antioxidant, or a mixture thereof.

According to the thirty-sixth embodiment, there is provided the method for manufacturing a crosslinked structure-containing polyolefin porous substrate as defined in any one of the twenty-seventh to the thirty-fifth embodiments, wherein the third antioxidant includes a phenolic antioxidant, an amine-based antioxidant, or a mixture thereof.

According to the thirty-seventh embodiment, there is provided the method for manufacturing a crosslinked structure-containing polyolefin porous substrate as defined in any one of the twenty-seventh to the thirty-sixth embodiments, wherein the fourth antioxidant includes a phosphorus-based antioxidant, a sulfur-based antioxidant, or a mixture thereof.

According to the thirty-eighth embodiment, there is provided the method for manufacturing a crosslinked structure-containing polyolefin porous substrate as defined in any one of the thirty-fourth to the thirty-seventh embodiments, wherein the phenolic antioxidant includes 2,6-di-t-butyl-4-methylphenol, 4,4'-thiobis(2-t-butyl-5-methylphenol), 2,2'-thiodiethylbis[3-(3,5-di-t-butyl-4-hydroxyphenyl)propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,5H)-trione, dioctadecyl 3,3'-thiodipropionate, or two or more of them.

According to the thirty-ninth embodiment, there is provided the method for manufacturing a crosslinked structure-containing polyolefin porous substrate as defined in any one of the thirty-fifth to the thirty-eighth embodiments, wherein the phosphorus-based antioxidant includes 3,9-bis(2,6-di-t-butyl-4-methylphenoxy)-2,4,8,10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

According to the fortieth embodiment, there is provided the method for manufacturing a crosslinked structure-containing polyolefin porous substrate as defined in any one of the thirty-fifth to the thirty-ninth embodiments, wherein the sulfur-based antioxidant includes 3,3'-thiobis-1,1'-didodecyl ester, dimethyl 3,3'-thiodipropionate, dioctadecyl 3,3'-thiodipropionate, 2,2-bis{[3-(dodecylthio)-1-oxopropoxy]methyl}propane-1,3-diyl bis[3-(dodecylthio)propionate], or two or more of them.

According to the forty-first embodiment, there is provided the method for manufacturing a crosslinked structure-containing polyolefin porous substrate as defined in any one of the twentieth to the fortieth embodiments, wherein the UV rays are irradiated at an irradiation light dose of 10-1000 mJ/cm$^2$.

In yet another aspect of the present disclosure, there is provided a lithium secondary battery according to the following embodiment.

According to the forty-second embodiment, there is provided a lithium secondary battery including a positive electrode, a negative electrode and a separator interposed between the positive electrode and the negative electrode, wherein the separator is the crosslinked structure-containing separator for a lithium secondary battery as defined in any one of the fifteenth to the nineteenth embodiments.

Advantageous Effects

Even though the crosslinked structure-containing polyolefin porous substrate according to an embodiment of the present disclosure includes a crosslinked structure having polymer chains interconnected directly with one another, it includes regions having a different crosslinked degree, and thus can prevent a change in shutdown temperature as compared to the polyolefin porous substrate before crosslinking, while showing a high meltdown temperature.

In addition, even though the crosslinked structure-containing polyolefin porous substrate according to an embodiment of the present disclosure includes a crosslinked structure having polymer chains interconnected directly with one another, it includes regions having a different crosslinked degree, and thus it is possible to prevent a decrease in mechanical strength of the polyolefin porous substrate after crosslinking.

The crosslinked structure-containing separator for a lithium secondary battery including the crosslinked structure-containing polyolefin porous substrate according to an embodiment of the present disclosure shows excellent heat resistance and mechanical strength by virtue of the crosslinked structure-containing polyolefin porous substrate having excellent heat resistance.

The method for manufacturing the crosslinked structure-containing polyolefin porous substrate according to an embodiment of the present disclosure uses the second polyolefin composition, which includes an antioxidant in an amount of 0.8 parts by weight or more based on 100 parts by weight of polyolefin contained in the second polyolefin composition. Thus, the method provides a crosslinked structure-containing polyolefin porous substrate which maintains a shutdown temperature similar to the shutdown temperature of the polyolefin porous substrate before crosslinking, while showing a high meltdown temperature, and ensures mechanical strength even after crosslinking.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the crosslinked structure-containing polyolefin porous substrate according to an embodiment of the present disclosure.
FIG. 2 is a schematic view illustrating the crosslinked structure-containing polyolefin porous substrate according to another embodiment of the present disclosure.
FIG. 3 illustrates the co-extrusion of a first polyolefin composition and a second polyolefin composition according to an embodiment of the present disclosure.
FIG. 4 is a graph illustrating a change in air permeability of the crosslinked structure-containing polyolefin porous substrate according to each of Examples 4 and 5 and Comparative Examples 2 and 4, depending on temperature.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the terms, such as 'first', 'second', 'third' and 'fourth', are used to differentiate one constitutional element from the other constitutional elements, and each constitutional element is not limited to such terms.

The crosslinked structure-containing polyolefin porous substrate according to an embodiment of the present disclosure is a crosslinked structure-containing polyolefin porous substrate having a crosslinked structure including polymer chains interconnected directly with one another, wherein the polyolefin porous substrate includes, in a height direction extending from one surface to the other surface, a first region contacted with one surface and a second region extended from the outside of the first region toward the other surface, and polyolefin contained in the first region and polyolefin contained in the second region show a difference in crosslinking degree of 10% or more.

When a crosslinked structure-containing polyolefin porous substrate has a crosslinking structure including polymer chains interconnected directly with one another, and the whole crosslinked structure-containing polyolefin porous substrate shows the same crosslinking degree, there has been a problem in that the polyolefin porous substrate shows an increased meltdown temperature but undergoes a change in shutdown temperature as compared to the polyolefin porous substrate before crosslinking.

The crosslinked structure-containing polyolefin porous substrate according to an embodiment of the present disclosure includes regions having a different crosslinking degree, even though the whole polyolefin porous substrate is crosslinked, and thus may have a high meltdown temperature and a shutdown temperature similar to the shutdown temperature of the polyolefin porous substrate before crosslinking. In addition, the crosslinked structure-containing polyolefin porous substrate may have excellent mechanical strength.

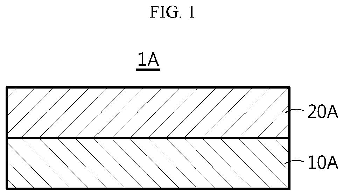

FIG. 1 is a schematic view illustrating the crosslinked structure-containing polyolefin porous substrate according to an embodiment of the present disclosure.

Referring to FIG. 1, the crosslinked structure-containing polyolefin porous substrate 1A includes, in a height direction extending from one surface to the other surface, a first region 10A that is in contact with one surface.

The first region 10A has a crosslinked structure including polymer chains interconnected directly with one another. In other words, the first region 10A includes crosslinked polyolefin.

Herein, the expression 'crosslinked structure including polymer chains interconnected directly with one another' means a structure in which polymer chains substantially including polyolefin, preferably, including polyolefin alone, are provided with reactivity through the addition of a photoinitiator, and are crosslinked directly with one another. Therefore, crosslinking that occurs between additionally introduced crosslinking agents does not correspond to 'crosslinked structure including polymer chains interconnected directly with one another' as defined herein. In addition, crosslinking that occurs between such an additional crosslinking agent and polymer chains does not correspond to 'crosslinked structure including polymer chains interconnected directly with one another' as define herein, even though the polymer chains substantially include polyolefin or include polyolefin alone.

The first region 10A has excellent heat resistance by virtue of the directly crosslinked polyolefin chains. The first region 10A having excellent heat resistance prevents meltdown of the substrate, even when the temperature of the crosslinked structure-containing polyolefin porous substrate is increased to the melting point of polyolefin or higher.

Referring to FIG. 1, the crosslinked structure-containing polyolefin porous substrate 1A includes, in a height direction extending from one surface to the other surface, a second region 20A that extends from the outside of the first region 10A toward the other surface.

The second region 20A has a crosslinked structure including polymer chains interconnected directly with one another. In other words, the second region 20A includes crosslinked polyolefin. The second region 20A has excellent heat resistance by virtue of the directly crosslinked polyolefin chains. The second region 20A having excellent heat resistance prevents meltdown of the substrate, even when the temperature of the crosslinked structure-containing polyolefin porous substrate is increased to the melting point of polyolefin or higher.

In the crosslinked structure-containing polyolefin porous substrate according to an embodiment of the present disclosure, polyolefin contained in the first region 10A and polyolefin contained in the second region 20A show a difference in crosslinking degree of 10% or more.

The crosslinked structure-containing polyolefin porous substrate according to an embodiment of the present disclosure includes the first region 10A and the second region 20A showing a difference in crosslinking degree of 10% or more, even though the whole polyolefin porous substrate is crosslinked, and thus may have a high meltdown temperature and a shutdown temperature similar to the shutdown temperature of the polyolefin porous substrate before crosslinking. In addition, the crosslinked structure-containing polyolefin porous substrate may have excellent mechanical strength.

The region having a higher crosslinking degree among the first region 10A and the second region 20A may undergo main chain scission of polyolefin, despite the higher crosslinking degree, so that the shutdown temperature may be maintained at a level similar to the shutdown temperature of the polyolefin porous substrate before crosslinking. However, the region having a higher crosslinking degree may cause shrinking of the crosslinked structure-containing polyolefin porous substrate due to rapid crosslinking, and may undergo excessive main chain scission of polyolefin to cause degradation of the mechanical strength of the crosslinked structure-containing polyolefin porous substrate.

The region having a lower crosslinking degree among the first region 10A and the second region 20A is inhibited from main chain scission of polyolefin, and thus prevents shrinking of the crosslinked structure-containing polyolefin porous substrate, caused by rapid crosslinking, or degradation of the mechanical strength of the crosslinked structure-containing polyolefin porous substrate, caused by excessive main chain scission of polyolefin. Therefore, it is possible for the crosslinked structure-containing polyolefin porous substrate to have a suitable level of mechanical strength.

When the difference in crosslinking degree between the first region 10A and the second region 20A is less than 10%, it is difficult for the crosslinked structure-containing polyolefin porous substrate to have a shutdown temperature similar to the shutdown temperature of the polyolefin porous substrate before crosslinking and to ensure excellent mechanical strength, since the first region 10A and the second region 20A show an insignificant difference in crosslinking degree.

According to an embodiment of the present disclosure, polyolefin contained in the first region 10A and polyolefin contained in the second region 20A may show a difference in crosslinking degree of 20% or more, 22% or more, 29% or more, 30% or more, 33% or more, 40% or more, or 41% or more. When the first region 10A and the second region 20A satisfy the above-defined difference in crosslinking degree, it is possible for the crosslinked structure-containing polyolefin porous substrate to have a shutdown temperature similar to the shutdown temperature of the polyolefin porous substrate before crosslinking and to ensure excellent mechanical strength with ease.

According to an embodiment of the present disclosure, the first region may have a thickness corresponding to 10-80%, 15-70%, or 20-60%, based on the total thickness of the polyolefin porous substrate. When the first region satisfies the above-defined range of thickness, it is easier to ensure a sufficient proportion occupied by each of the first region and the second region. Therefore, it is possible for the crosslinked structure-containing polyolefin porous substrate to have a shutdown temperature similar to the shutdown temperature of the polyolefin porous substrate before crosslinking and to increase the meltdown temperature with ease.

According to an embodiment of the present disclosure, polyolefin contained in the first region 10A may have a higher crosslinking degree as compared to polyolefin contained in the second region 20A.

When polyolefin contained in the first region 10A may have a higher crosslinking degree as compared to polyolefin contained in the second region 20A, polyolefin contained in the first region 10A may have a crosslinking degree of 20% or more, 25% or more, 28% or more, 30% or more, 32% or more, 35% or more, 39% or more, 40% or more, 45% or more, 48% or more, or 50% or more, and 60% or less, 50% or less, 48% or less, 45% or less, 40% or less, 39% or less, 35% or less, 32% or less, 30% or less, 28% or less, or 25% or less.

When polyolefin contained in the first region 10A satisfies the above-defined range of crosslinking degree, it is easier for the crosslinked structure-containing polyolefin porous substrate to have a shutdown temperature similar to the shutdown temperature of the polyolefin porous substrate before crosslinking.

Herein, the crosslinking degree of the first region may be calculated according to the following formula:

$$\text{Crosslinking degree (\%)} = 100 \text{ X (B/A)},$$

wherein A is the weight of the first region, and B represents the dry weight of the first region, obtained by dipping the first region in 70g of trichlorobenzene at 135°C, allowing the mixture to stand at 135°C for 20 hours, filtering the mixture through a 100-mesh iron net, collecting the insoluble content on the iron net, and carrying out vacuum drying.

The crosslinking degree may be determined by the above-mentioned method, but is not limited thereto. Any method for determining a crosslinking degree may be used with no particular limitation, as long as it is used conventionally in the art.

When polyolefin contained in the first region 10A has a higher crosslinking degree as compared to polyolefin contained in the second region 20A, polyolefin contained in the second region 20A may have a crosslinking degree of 1% or more, 2% or more, 3% or more, 4% or more, 5% or more, 6% or more, or 8% or more, and 10% or less, 8% or less, 5% or less, 4% or less, 3% or less, or 2% or less. When polyolefin contained in the second region 20A satisfies the above-defined range of crosslinking degree, it is easier for the crosslinked structure-containing polyolefin porous substrate to have excellent mechanical strength.

The crosslinking degree of the second region may be calculated according to the following formula:

$$\text{Crosslinking degree (\%)} = 100 \text{ X (B/A)},$$

wherein A is the weight of the second region, and B represents the dry weight of the second region, obtained by dipping the second region in 70g of trichlorobenzene at 135°C, allowing the mixture to stand at 135°C for 20 hours, filtering the mixture through a 100-mesh iron net, collecting the insoluble content on the iron net, and carrying out vacuum drying.

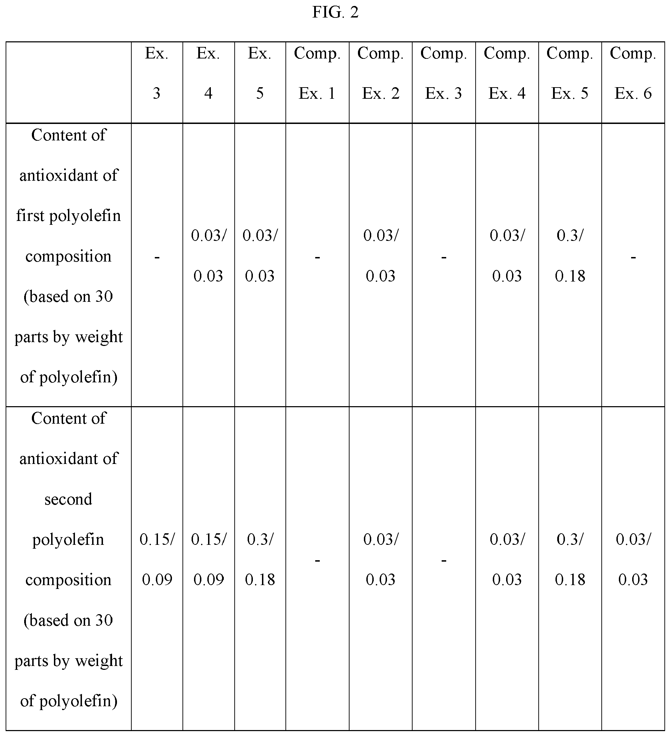

FIG. 2 is a schematic view illustrating the crosslinked structure-containing polyolefin porous substrate according to another embodiment of the present disclosure.

In FIG. 2, reference will be made to the above description about the first region 10B and the second region 20B.

Referring to FIG. 2, the crosslinked structure-containing polyolefin porous substrate 1B may further include a third region 30B extending from the outside of the second region 20B toward the other surface, wherein polyolefin contained in the second region 20B and polyolefin contained in the third region 30B may show a difference in crosslinking degree of 10% or more.

The third region 30B has a crosslinked structure including polymer chains interconnected directly with one another. In other words, the third region 30B includes crosslinked polyolefin.

When the crosslinked structure-containing polyolefin porous substrate according to an embodiment of the present disclosure further includes the third region 30B, the separator may be easily prevented from a curling phenomenon, caused by a difference in crosslinking degree between the first region 10B and the second region 20B.

According to an embodiment of the present disclosure, polyolefin contained in the third region 30B and polyolefin contained in the second region 20B may show a difference in crosslinking degree of 20% or more, 22% or more, 29% or more, 30% or more, 40% or more, or 41% or more. When the third region 30B and the second region 20B satisfy the above-defined difference in crosslinking degree, it is possible for the crosslinked structure-containing polyolefin porous substrate to have a shutdown temperature similar to the shutdown temperature of the polyolefin porous substrate before crosslinking and to ensure excellent mechanical strength with ease.

According to an embodiment of the present disclosure, the second region 20B may have a thickness corresponding to 10-60%, 15-50%, or 15-45%, based on the total thickness of the polyolefin porous substrate. When the second region satisfies the above-defined range of thickness, it is possible to ensure a sufficient proportion occupied by each of the first region, the second region and the third region. Therefore, it is possible for the crosslinked structure-containing polyolefin porous substrate to have a shutdown temperature similar to the shutdown temperature of the polyolefin porous substrate before crosslinking and to increase the meltdown temperature with ease.

According to an embodiment of the present disclosure, polyolefin contained in the third region 30B may have a higher crosslinking degree as compared to polyolefin contained in the second region 20B.

When polyolefin contained in the third region 30B may have a higher crosslinking degree as compared to polyolefin contained in the second region 20B, polyolefin contained in the third region 30B may have a crosslinking degree of 20% or more, 25% or more, 28% or more, 30% or more, 32% or more, 35% or more, 39% or more, 40% or more, 45% or more, 48% or more, or 50% or more, and 60% or less, 50% or less, 48% or less, 45% or less, 40% or less, 39% or less, 35% or less, 32% or less, 30% or less, 28% or less, or 25% or less.

When polyolefin contained in the third region 30B satisfies the above-defined range of crosslinking degree, it is easier for the crosslinked structure-containing polyolefin porous substrate to have a shutdown temperature similar to the shutdown temperature of the polyolefin porous substrate before crosslinking.

Herein, the crosslinking degree of the third region may be calculated according to the following formula:

$$\text{Crosslinking degree (\%)} = 100 \times (B/A),$$

wherein A is the weight of the third region, and B represents the dry weight of the third region, obtained by dipping the third region in 70g of trichlorobenzene at 135°C, allowing the mixture to stand at 135°C for 20 hours, filtering the mixture through a 100-mesh iron net, collecting the insoluble content on the iron net, and carrying out vacuum drying.

The crosslinking degree may be determined by the above-mentioned method, but is not limited thereto. Any method for determining a crosslinking degree may be used with no particular limitation, as long as it is used conventionally in the art.

According to an embodiment of the present disclosure, the third region 30B may have the same physical properties as the first region 10B.

According to an embodiment of the present disclosure, the crosslinked structure-containing polyolefin porous substrate may be a porous film.

According to an embodiment of the present disclosure, the polyolefin may include polyethylene; polypropylene; polybutylene; polypentene; polyhexene; polyoctene; a copolymer of at least two of ethylene, propylene, butene, pentene, 4-methylpentene, hexene , heptene and octene; or a mixture thereof.

Non-limiting examples of the polyethylene include low-density polyethylene (LDPE), linear low-density polyethylene (LLDPE), high-density polyethylene (HDPE), or the like. Among those, when the polyethylene is high-density polyethylene having a high crystallization degree and a high resin melting point, it is easier to provide a desired level of heat resistance and an increased modulus.

According to an embodiment of the present disclosure, the polyolefin may have a weight average molecular weight of 200,000-1,500,000, 220,000-1,000,000, 250,000-800,000, or 250,000-600,000. When the polyolefin has the above-defined range of weight average molecular weight, it is easier to provide excellent strength and heat resistance, while ensuring the uniformity and film-forming processability of the polyolefin porous substrate.

Herein, the weight average molecular weight may be determined by using gel permeation chromatography (GPC) (PL GPC220, Agilent Technologies) under the following analysis conditions:

- Column: PL Olexis (Polymer Laboratories)
- Solvent: Trichlorobenzene (TCB)

- Flow rate: 1.0 mL/min
- Sample concentration: 1.0 mg/mL
- Injection amount: 200 $\mu$L
- Column temperature: 160°C
- Detector: Agilent High Temperature RI detector
- Standard: Polystyrene (corrected with tertiary function)

According to an embodiment of the present disclosure, the crosslinked structure-containing polyolefin porous substrate may have a number of double bonds present in the polyolefin chains of 0.01-0.6 or 0.02-0.5 per 1000 carbon atoms, as determined by $^1$H-NMR. When the crosslinked structure-containing polyolefin porous substrate has the above-defined number of double bonds, it is easier to prevent the problem of degradation of battery performance at high temperature and/or high voltage.

The double bond structure present in the polyolefin chains may exist at the ends of the polyolefin chains or inside of the polyolefin chains (i.e. throughout the polyolefin chains, except the ends). Particularly, the number of double bond structures present in the polyolefin chains, except the ends, may affect the crosslinking of the polyolefin chains.

According to an embodiment of the present disclosure, the number of double bonds present in the polyolefin chains, except the ends, of the crosslinked structure-containing polyolefin porous substrate may be 0.005-0.59 per 1000 carbon atoms. Herein, 'double bonds present in the polyolefin chains, except the ends' refers to double bonds present throughout the polyolefin chains, except the ends of the polyolefin chains. In addition, the term 'end' refers to the position of carbon atom linked to each of the terminals of the polyolefin chains.

According to an embodiment of the present disclosure, the crosslinked structure-containing polyolefin porous substrate may have a thickness of 3-16 $\mu$m, or 5-12 $\mu$m. When the crosslinked structure-containing polyolefin porous substrate has the above-defined range of thickness, it is easier to ensure energy density, while preventing the separator from being damaged easily during the use of a battery.

The crosslinked structure-containing separator for a lithium secondary battery according to an embodiment of the present disclosure may include a crosslinked structure-containing polyolefin porous substrate having a crosslinked structure including polymer chains interconnected directly with one another.

According to an embodiment of the present disclosure, the crosslinked structure-containing separator for a lithium secondary battery may further include an inorganic composite porous layer disposed on at least one surface of the crosslinked structure-containing polyolefin porous substrate, and including an inorganic filler and a binder polymer.

The inorganic composite porous layer may be formed on one surface or both surfaces of the crosslinked structure-containing polyolefin porous substrate. The inorganic composite porous layer includes an inorganic filler, and a binder polymer which attaches the inorganic filler particles to one another so that they may retain their binding states (i.e. the binder polymer interconnects and fixes the inorganic filler particles), and the inorganic filler may be bound to the crosslinked structure-containing polyolefin porous substrate by the binder polymer. The inorganic composite porous layer prevents the crosslinked structure-containing polyolefin porous substrate from undergoing a severe heat shrinking behavior at high temperature by virtue of the inorganic filler to improve the safety of the separator. For example, the separator may show a heat shrinkage of 20% or less, 2-15%, or 2-10% in each of the machine direction and the transverse direction, as determined after allowing the separator to stand at 120°C for 30 minutes.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li$^+$) of operating voltage of an applicable electrochemical device. Particularly, when using an inorganic filler having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic filler may be an inorganic filler having a dielectric constant of 5 or more, or 10 or more. Non-limiting examples of the inorganic filler having a dielectric constant of 5 or more may include any one selected from the group consisting of $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $AlOOH$, $Al(OH)_3$, $SiC$, $TiO_2$, or a mixture thereof.

According to another embodiment of the present disclosure, the inorganic filler may be an inorganic filler having lithium ion transportability, i.e. inorganic filler containing lithium elements and capable of transporting lithium ions, while not storing lithium. Non-limiting examples of the inorganic filler having lithium ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), (LiAlTiP)$_xO_y$-based glass ($1 < x < 4$, $0 < y < 13$), such as $14Li_2O$-$9Al_2O_3$-$38TiO_2$-$39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), such as $Li_{3.25}Ge_{0.25}P_{0.75}S_4$, lithium nitride ($Li_xN_y$, $0 < x < 4$, $0 < y < 2$), such as $Li_3N$, $SiS_2$-based glass ($Li_xSi_yS_z$, $0 < x < 3$, $0 < y < 2$, $0 < z < 4$), such as $Li_3PO_4$-$Li_2S$-$SiS_2$, and $P_2S_5$-based glass ($Li_xP_yS_z$, $0 < x < 3$, $0 < y < 3$, $0 < z < 7$), such as $LiILi_2S$-$P_2S_5$, or a mixture thereof.

According to an embodiment of the present disclosure, the inorganic filler may have an average particle diameter of 0.001-10 $\mu$m, 0.01-10 $\mu$m, 0.05-5 $\mu$m, or 0.1-2 $\mu$m to form a coating layer having a uniform thickness and to provide suitable porosity. When the inorganic filler has the above-defined range of average particle diameter, it is possible to form an inorganic composite porous layer having a uniform thickness and suitable porosity and to provide high dispersibility of inorganic filler and desired energy density.

Herein, the average particle diameter of the inorganic filler means $D_{50}$ particle diameter, and "$D_{50}$" means the particle diameter at the point of 50% in the particle number accumulated distribution as a function of particle diameter. The particle diameter may be determined by using the laser diffraction method. Particularly, powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

The binder polymer may have a glass transition temperature ($T_g$) of -200 to 200°C. When the binder polymer satisfies the above-defined range of glass transition temperature, it can provide the finished inorganic composite porous layer with improved mechanical properties, such as flexibility and elasticity. The binder polymer may have ion conductivity. When the binder polymer has ion conductivity, it is possible to further improve the performance of a battery. The binder polymer may have a dielectric constant ranging from 1.0 to 100 (measured at a frequency of 1 kHz), or from 10 to 100. When the binder polymer has the above-defined range of dielectric constant, it is possible to improve the salt dissociation degree in an electrolyte.

According to an embodiment of the present disclosure, the binder polymer may include polyvinylidene fluoride, polyvinylidene fluoride-co-hexafluoropropylene, polyvinylidene fluoride-co-chlorotrifluoroethylene, polyvinylidene fluoride-co-tetrafluoroethylene, polyvinylidene fluoride-co-trichloroethylene, acrylic copolymer, styrene-butadiene copolymer, poly(acrylic acid), polymethyl methacrylate, polybutyl acrylate, polyacrylonitrile, polyvinyl pyrrolidone, polyvinyl alcohol, polyvinyl acetate, polyethylene-co-vinyl acetate, polyethylene oxide, polyacrylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the inorganic filler to the binder polymer is determined considering the thickness, pore size and porosity of the finished inorganic composite porous layer, and may be 50:50-99.9:0.1, or 60:40-99.5:0.5. When the weight ratio of the inorganic filler to the binder polymer satisfies the above-defined range, it is possible to ensure vacant spaces formed among the inorganic filler particles sufficiently, and thus to ensure the pore size and porosity of the inorganic composite porous layer with ease. In addition, it is possible to ensure the adhesion among the inorganic filler particles with ease.

According to an embodiment of the present disclosure, the inorganic composite porous layer may have a structure in which the inorganic filler particles are bound to one another by the binder polymer, while they are packed in contact with one another. In this manner, interstitial volumes are formed among the inorganic filler particles, and the interstitial volumes become vacant spaces to form pores.

According to another embodiment of the present disclosure, the inorganic composite porous layer may have a structure including: a plurality of nodes including an inorganic filler, and a binder polymer at least partially covering the surface of the inorganic filler; and at least one filament formed from the binder polymer of the nodes in a threadlike shape, wherein the filament has a node-linking portion extended from one node for linking with another node, and the node-linking portion forms a three-dimensional network structure through the filaments derived from the binder polymer and crossing one another.

According to an embodiment of the present disclosure, the inorganic composite porous layer may have an average pore size of 0.001-10 $\mu$m, or 0.001-10 $\mu$m. The average pore size of the inorganic composite porous layer may be determined by using the capillary flow porometry. The capillary flow porometry measures the diameter of the smallest pore in the thickness direction. Therefore, in order to determine the average pore size of the inorganic composite porous layer alone by the capillary flow porometry, it is required to separate the inorganic composite porous layer from the crosslinked structure-containing polyolefin porous substrate, and to surround the separated inorganic composite porous layer with a non-woven web capable of supporting the same. Herein, the non-woven web should have a significantly larger pore size as compare to the pore size of the inorganic composite porous layer.

According to an embodiment of the present disclosure, the inorganic composite porous layer may have a porosity of 5-95%, 10-95%, 20-90%, or 30-80%. The porosity corresponds to a value obtained by subtracting the volume expressed from the weight and density of each ingredient in the porous coating layer, from the volume calculated from the thickness, width and length of the porous coating layer.

The porosity of the inorganic composite porous layer may be determined from scanning electron microscopic (SEM) images, by using a mercury porosimeter, or through the BET 6-point method based on nitrogen gas adsorption flow using a porosimetry analyzer (e.g. Belsorp-II mini, Bell Japan Inc.).

According to an embodiment of the present disclosure, the inorganic composite porous layer may have a thickness of 1.5-5.0 μm on one surface of the crosslinked structure-containing polyolefin porous substrate. When the thickness of the inorganic composite porous layer satisfies the above-defined range, it is possible to provide high adhesion to an electrode and increased cell strength of a battery.

The crosslinked structure-containing separator for a lithium secondary battery according to another embodiment of the present disclosure may include: the crosslinked structure-containing polyolefin porous substrate; an inorganic composite porous layer disposed on at least one surface of the crosslinked structure-containing polyolefin porous substrate, and containing an inorganic filler and a first binder polymer; and a porous adhesive layer disposed on the inorganic composite porous layer and containing a second binder polymer.

The inorganic composite porous layer may be formed on one surface or both surfaces of the crosslinked structure-containing polyolefin porous substrate. The inorganic composite porous layer includes an inorganic filler, and a first binder polymer which attaches the inorganic filler particles to one another so that they may retain their binding states (i.e. the first binder polymer interconnects and fixes the inorganic filler particles), and the inorganic filler may be bound to the crosslinked structure-containing polyolefin porous substrate by the first binder polymer. The inorganic composite porous layer prevents the crosslinked structure-containing polyolefin porous substrate from undergoing a severe heat shrinking behavior at high temperature by virtue of the inorganic filler to improve the safety of the separator. For example, the separator may show a heat shrinkage of 20% or less, 2-15%, or 2-10% in each of the machine direction and the transverse direction, as determined after allowing the separator to stand at 150°C for 30 minutes.

According to an embodiment of the present disclosure, the inorganic composite porous layer may have a structure in which the inorganic filler particles are bound to one another by the first binder polymer, while they are packed in contact with one another. In this manner, interstitial volumes are formed among the inorganic filler particles, and the interstitial volumes become vacant spaces to form pores.

The porous adhesive layer includes a second binder polymer so that the separator including the inorganic composite porous layer may ensure adhesion to an electrode. In addition, the porous adhesive layer has pores formed therein to prevent an increase in resistance of the separator.

According to an embodiment of the present disclosure, the second binder polymer in the porous adhesive layer cannot infiltrate to the surface and/or inner part of the crosslinked structure-containing polyolefin porous substrate to minimize an increase in resistance of the separator.

According to an embodiment of the present disclosure, the porous adhesive layer may have a pattern including at least one adhesive region comprising the second binder polymer, and at least one non-coated region where no adhesive region is formed. The pattern may have a dot-like, stripe-like, diagonal, waved, triangular, quadrangular or semicircular shape. When the porous adhesive layer has such a pattern, the separator is improved in terms of resistance, and the non-coated region where no adhesive region is formed allows wetting with an electrolyte to provide the separator with improved electrolyte wettability.

According to an embodiment of the present disclosure, the porous adhesive layer may have a thickness of 0.5-1.5 μm, 0.6-1.2 μm, or 0.6-1.0 μm. When the thickness of the porous adhesive layer falls within the above-defined range, it is possible to provide excellent adhesion to an electrode, resulting in an increase in cell strength of a battery. In addition, such a thickness is favorable in terms of the cycle characteristics and resistance characteristics of a battery.

According to an embodiment of the present disclosure, the first binder polymer may be a binder polymer having excellent heat resistance. When the first binder polymer has excellent heat resistance, the inorganic composite porous layer may have further improved heat resistance. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

According to an embodiment of the present disclosure, the first binder polymer may include acrylic polymer, polyacrylic acid, styrene butadiene rubber, polyvinyl alcohol, or two or more of them.

Particularly, the acrylic polymer may include acrylic homopolymer prepared by polymerizing acrylic monomers alone, or copolymers of acrylic monomers with another monomers. For example, the acrylic polymer may include copolymer of ethylhexyl acrylate with methyl methacrylate, polymethyl methacrylate, polyethylhexyl acrylate, polybutyl acrylate, polyacrylonitrile, copolymer of butyl acrylate with methyl methacrylate, or two or more of them.

According to an embodiment of the present disclosure, the weight ratio of the inorganic filler to the first binder polymer may be 95:5-99.9:0.1, 96:4-99.5:0.5, or 97:3-99: 1. When the weight ratio of the inorganic filler to the first binder polymer falls within the above-defined range, a large amount of inorganic filler is distributed per unit area of the separator to provide the separator with improved thermal safety. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

The second binder polymer may be a binder polymer used conventionally for forming an adhesive layer. The second binder polymer may have a glass transition temperature ($T_g$) of -200 to 200°C. When the second binder polymer satisfies the above-defined range of glass transition temperature, it can provide the finished adhesive layer with improved mechanical properties, such as flexibility and elasticity. The second binder polymer may have ion conductivity. When the second binder polymer has ion conductivity, it is possible to further improve the performance of a battery. The second binder polymer may have a dielectric constant ranging from 1.0 to 100 (measured at a frequency of 1 kHz), or from 10 to 100. When the second binder polymer has the above-defined range of dielectric constant, it is possible to improve the salt dissociation degree in an electrolyte.

According to an embodiment of the present disclosure, the second binder polymer may include polyvinylidene fluoride, polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polymethyl methacrylate, polyethylhexyl acrylate, polybutyl acrylate, polyacrylonitrile, polyvinyl pyrrolidone, polyvinyl acetate, copolymer of ethylhexyl acrylate with methyl methacrylate, polyethylene-co-vinyl acetate, polyethylene oxide, polyacrylate, or two or more of them.

Since the crosslinked structure-containing separator for a lithium secondary battery according to an embodiment of the present disclosure includes the crosslinked structure-containing polyolefin porous substrate having a crosslinked structure including polymer chains interconnected directly with one another, it shows excellent high-temperature stability. For example, the crosslinked structure-containing separator for a lithium secondary battery may have an increased meltdown temperature as compared to the conventional separator for a lithium secondary battery before crosslinking. For example, the separator may have a meltdown temperature of 160°C or higher, 170°C or higher, 180°C or higher, 190°C or higher, 197°C or higher, 198°C or higher, 200°C or higher, or 230°C or higher.

As used herein, the term 'separator including for a lithium secondary battery before crosslinking' refers to: a separator including a non-crosslinked and crosslinked structure-free polyolefin porous substrate; a separator including a non-crosslinked and crosslinked structure-free polyolefin porous substrate, and an inorganic composite porous layer disposed on at least one surface of the crosslinked structure-free polyolefin porous substrate, and containing an inorganic filler and a binder polymer; or a separator including a non-crosslinked and crosslinked structure-free polyolefin porous substrate, an inorganic composite porous layer disposed on at least one surface of the crosslinked structure-free polyolefin porous substrate and containing an inorganic filler and a first binder polymer, and a porous adhesive layer disposed on the inorganic composite porous layer and containing a second binder polymer.

The meltdown temperature may be determined through thermomechanical analysis (TMA). For example, a sample is taken in each of the machine direction and the transverse direction, and then the sample having a size of width 4.8 mm x length 8 mm is introduced to a TMA instrument (Q400, available from TA Instrument). Then, while a tension of 0.01 N is applied to the sample, the sample is heated to a temperature from 30°C to 220°C at a heating rate of 5°C/min, and the temperature where the sample undergoes a rapid increase in length or the sample is broken may be determined as the meltdown temperature.

The crosslinked structure-containing separator for a lithium secondary battery according to an embodiment of the present disclosure shows a smaller increase in shutdown temperature, as compared to the separator including a non-crosslinked porous polyolefin substrate, and also provides a small change in shutdown temperature. The crosslinked structure-containing separator for a lithium secondary battery according to an embodiment of the present disclosure undergoes an increase in meltdown temperature, as compared to the separator before crosslinking, but shows an insignificant increase in shutdown temperature, and thus can ensure overcharge safety derived from the shutdown temperature, while providing the separator with significantly enhanced high-temperature stability.

According to an embodiment of the present disclosure, the crosslinked structure-containing separator for a lithium secondary battery may have a shutdown temperature of 146°C or lower, 145°C or lower, 140°C or lower, or 133-140°C. When the crosslinked structure-containing separator for a lithium secondary battery has the above-defined range of shutdown temperature, it is possible to ensure overcharge safety and to prevent the problem of an increase in resistance, caused by damages upon the pores of the crosslinked structure-containing polyolefin porous substrate during high-temperature pressurization processes in the assemblage of a battery.

The shutdown temperature may be determined by measuring the time (sec) required for 100 mL of air to pass through a separator under a constant pressure of 0.05 MPa, when the separator is heated at a rate of 5°C/min, by using an air permeability tester, and determining a temperature where the separator undergoes a rapid increase in air permeability.

Since the crosslinked structure-containing separator for a lithium secondary battery according to an embodiment of the present disclosure includes the crosslinked structure-containing polyolefin porous substrate having a crosslinked structure including polymer chains interconnected directly with one another, the polyolefin porous substrate can retain substantially the same pore structure as the polyolefin porous substrate before crosslinking, even after crosslinking.

The crosslinked structure-containing separator for a lithium secondary battery according to an embodiment of the present disclosure may not undergo significant degradation of air permeability, weight per unit area, tensile strength, tensile elongation, puncture strength, electrical resistance, or the like, as compared to the air permeability, weight per unit area, tensile strength, tensile elongation, puncture strength, electrical resistance, or the like, of the separator for a lithium secondary battery before crosslinking, and also shows a small change in those properties.

The crosslinked structure-containing separator for a lithium secondary battery according to an embodiment of the present disclosure may show a change in air permeability of 10% or less, 0-10%, 0-5%, or 0-3%, as compared to the separator for a lithium secondary battery before crosslinking.

The change in air permeability may be calculated according to the following formula:

$$\text{Change (\%) in air permeability} = [(\text{Air permeability of crosslinked structure-containing separator for lithium secondary battery after crosslinking}) - (\text{Air permeability of separator for lithium secondary battery before crosslinking})] / (\text{Air permeability of separator for lithium secondary battery before crosslinking}) \times 100$$

As used herein, the term 'crosslinked structure-containing separator for a lithium secondary battery after crosslinking' refers to: a separator including a crosslinked structure-containing polyolefin porous substrate; a separator including a crosslinked structure-containing polyolefin porous substrate, and an inorganic composite porous layer disposed on at least one surface of the crosslinked structure-containing polyolefin porous substrate and containing an inorganic filler and a binder polymer; or a separator including a crosslinked structure-containing polyolefin porous substrate, an inorganic composite porous layer disposed on at least one surface of the crosslinked structure-containing polyolefin porous substrate and containing an inorganic filler and a first binder polymer, and a porous adhesive layer disposed on the top surface of the inorganic composite porous layer and containing a second binder polymer.

The air permeability (Gurley) may be determined according to ASTM D726-94. Herein, Gurley refers to resistance against air flow and is determined by a Gurley densometer. The air permeability value described herein is expressed by the time (seconds), i.e. air permeation time, required for 100 cc of air to pass through a section of sample substrate having an area of 1 in$^2$ under a pressure of 12.2 in H$_2$O.

The crosslinked structure-containing separator for a lithium secondary battery according to an embodiment of the present disclosure may show a change in weight per unit area of 5% or less, or 0-5%, as compared to the separator for a lithium secondary battery before crosslinking.

The change in weight per unit area may be calculated according to the following formula:

$$\text{Change (\%) in weight per unit area} = [(\text{Weight per unit area of crosslinked structure-containing separator for lithium secondary battery after crosslinking}) - (\text{Weight per unit area of separator for lithium secondary battery before crosslinking})] / (\text{Weight per unit area of separator for lithium secondary battery before crosslinking}) \times 100$$

The weight per unit area (g/m$^2$) is determined by preparing a sample having a width of 1 m and a length of 1 m and measuring the weight of the sample.

The crosslinked structure-containing separator for a lithium secondary battery according to an embodiment of the present disclosure may show a change in tensile strength of 20% or less, 0-20%, 0-10%, 0-9%, 0-8%, or 0-7.53%, in each of the machine direction and the transverse direction, as compared to the separator for a lithium secondary battery before crosslinking.

The change in tensile strength may be calculated according to the following formula:

Change (%) in tensile strength in machine direction = [(Tensile strength in machine direction of separator for lithium secondary battery before crosslinking) - (Tensile strength in machine direction of crosslinked structure-containing separator for lithium secondary battery after crosslinking)] / (Tensile strength in machine direction of separator for lithium secondary battery before crosslinking) X 100

Change (%) in tensile strength in transverse direction = [(Tensile strength in transverse direction of separator for lithium secondary battery before crosslinking) - (Tensile strength in transverse direction of crosslinked structure-containing separator for lithium secondary battery after crosslinking)] / (Tensile strength in transverse direction of separator for lithium secondary battery before crosslinking) X 100

The tensile strength refers to the strength of a specimen at the point of breaking, when the specimen is drawn in each of the machine direction and the transverse direction at a rate of 50 mm/min by using Universal Testing Systems (Instron® 3345) according to ASTM D882.

The crosslinked structure-containing separator for a lithium secondary battery according to an embodiment of the present disclosure may show a change in tensile elongation of 20% or less, or 0-20% in each of the machine direction and the transverse direction, as compared to the separator for a lithium secondary battery before crosslinking.

The change in tensile elongation may be calculated according to the following formula:

Change (%) in tensile elongation in machine direction = [(Tensile elongation in machine direction of separator for lithium secondary battery before crosslinking) - (Tensile elongation in machine direction of crosslinked structure-containing separator for lithium secondary battery after crosslinking)] / (Tensile elongation in machine direction of separator for lithium secondary battery before crosslinking) X 100

Change (%) in tensile elongation in transverse direction = [(Tensile elongation in transverse direction of separator for lithium secondary battery before crosslinking) - (Tensile elongation in transverse direction of crosslinked structure-containing separator for lithium secondary battery after crosslinking)] / (Tensile elongation in transverse direction of separator for lithium secondary battery before crosslinking) X 100

The tensile elongation can be calculated according to the following formula, after the specimen is drawn in each of the machine direction and the transverse direction at a rate of 50 mm/min by using Universal Testing Systems (Instron® 3345) according to ASTM D882, and the maximum length of the specimen elongated until the specimen is broken is measured.

$$\text{Tensile elongation (\%) in machine direction} = \text{(Length of specimen in machine direction right before breaking} - \text{Length of specimen in machine direction before elongation)} / \text{(Length of specimen in machine direction before elongation)}$$

$$\text{Tensile elongation (\%) in transverse direction} = \text{(Length of specimen in transverse direction right before breaking} - \text{Length of specimen in transverse direction before elongation)} / \text{(Length of specimen in transverse direction before elongation)}$$

The crosslinked structure-containing separator for a lithium secondary battery according to an embodiment of the present disclosure may show a change in puncture strength of 10% or less, 0.5-10%, 1-9%, or 1.18-8.71%, as compared to the separator for a lithium secondary battery before crosslinking.

Herein, the change in puncture strength may be calculated according to the following formula.

$$\text{Change (\%) in puncture strength} = [\text{(Puncture strength of separator for lithium secondary battery before crosslinking)} - \text{(Puncture strength of crosslinked structure-containing separator for lithium secondary battery after crosslinking)} ]/ \text{(Puncture strength of separator for lithium secondary battery before crosslinking)} \times 100$$

According to an embodiment of the present disclosure, the puncture strength may be determined according to ASTM D2582. Particularly, after setting a round tip with a diameter of 1 mm to operate at a rate of 120 mm/min, the puncture strength may be determined according to ASTM D2582.

The crosslinked structure-containing separator for a lithium secondary battery according to an embodiment of the present disclosure may show a change in electrical resistance of 15% or less, 2-10%, or 2-5%, as compared to the separator for a lithium secondary battery before crosslinking.

Herein, the change in electrical resistance may be calculated according to the following formula.

$$\text{Change (\%) in electrical resistance} = [\text{(Electrical resistance of crosslinked structure-containing separator for lithium secondary battery after crosslinking)} - \text{(Electrical resistance of separator for lithium secondary battery before crosslinking)} ]/ \text{(Electrical resistance of separator for lithium secondary battery before crosslinking)} \times 100$$

The electrical resistance may be determined by allowing a coin cell manufactured by using a separator sample to stand at room temperature for 1 day and measuring the resistance of the separator through impedance analysis.

The crosslinked structure-containing polyolefin porous substrate according to an embodiment of the present disclosure may be obtained by the method for manufacturing a crosslinked structure-containing polyolefin porous substrate as described hereinafter, but is not limited thereto.

The crosslinked structure-containing polyolefin porous substrate according to an embodiment of the present disclosure may be obtained by irradiating UV rays merely to one surface of a polyolefin porous substrate, while not irradiating UV rays to the other surface.

In another aspect of the present disclosure, there is provided a method for manufacturing a crosslinked structure-containing polyolefin porous substrate, including the steps of:

(S1) preparing a first polyolefin composition containing polyolefin and a diluting agent, and a second polyolefin composition containing polyolefin, a diluting agent and an antioxidant;

(S2) co-extruding the first polyolefin composition and the second polyolefin composition in such a manner that the extruded product of the second polyolefin composition may be laminated on the top surface of the extruded product of the first polyolefin composition;

(S3) molding and orienting the resultant product of step (S2) in the form of a sheet to obtain a polyolefin porous substrate;

(S4) extracting the diluting agent from the resultant product of step (S3);

(S5) thermally fixing the resultant product of step (S4);

(S6) applying a photoinitiator composition containing a photoinitiator to the resultant product of step (S5); and

(S7) irradiating UV rays to the resultant product of step (S6),

wherein the antioxidant is present in an amount of 0.8 parts by weight or more based on 100 parts by weight of polyolefin contained in the second polyolefin composition.

Hereinafter, the method for manufacturing a separator for a lithium secondary battery according to an embodiment of the present disclosure will be explained with reference to the main parts thereof.

According to the present disclosure, a photoinitiator is introduced to the surface of a polyolefin porous substrate, and the polyolefin porous substrate may be crosslinked upon the irradiation with UV rays. Herein, the term 'surface of a polyolefin porous substrate' may include not only the outermost surface of the polyolefin porous substrate but also the surfaces of the pores present inside of the polyolefin porous substrate.

The photoinitiator performs direct photo-crosslinking of the polymer chains in the polyolefin porous substrate. The photoinitiator alone may perform the crosslinking of the polyolefin porous substrate with no aid of another crosslinking agent, co-initiator or a synergist. The photoinitiator is converted into a reactive compound, while hydrogen atoms are removed through hydrogen abstraction merely by light absorption. Then, the photoinitiator forms radicals in the polymer chains in the polyolefin porous substrate, and makes the polymer chains reactive, thereby allowing the polymer chains to be interconnected directly with one another to perform photo-crosslinking.

Since the method for manufacturing a crosslinked structure-containing polyolefin porous substrate according to an embodiment of the present disclosure uses the photoinitiator to generate radicals in the polymer chains in the polyolefin porous substrate, thereby forming a crosslinked structure in which the polymer chains are interconnected directly with one another.

First, prepared are a first polyolefin composition containing polyolefin and a diluting agent, and a second polyolefin composition containing polyolefin, a diluting agent and an antioxidant (S1).

The first polyolefin composition is formed into the region having a higher crosslinking degree in the above-mentioned first region and second region, after being subjected to the co-extrusion, orientation steps, or the like, as described hereinafter. Reference will be made to the above description about polyolefin.

According to an embodiment of the present disclosure, the diluting agent may include: paraffin; wax; soybean oil; a phthalic acid ester, such as dibutyl phthalate, dihexyl phthalate, dioctyl phthalate, or the like; aromatic ether, such as diphenyl ether, benzyl ether, or the like; C10-C20 fatty acid, such as palmitic acid, stearic acid, oleic acid, linolic acid, linolenic acid, or the like; C 10-C20 fatty acid alcohol, such as palmitic acid alcohol, stearic acid alcohol, oleic acid alcohol, or the like; and a fatty acid ester such as palmitic acid mono-, di- or tri-ester, stearic acid mono-, di- or tri-ester, oleic acid mono-, di- or tri-ester, linoleic acid mono-, di- or tri-ester, or the like, resulting from esterification between saturated or unsaturated fatty acids whose fatty acid group has 4-26 carbon atoms, or one or two or more fatty acids having an epoxy-substituted double bond of unsaturated fatty acid, and a C1- C10 alcohol having 1-8 hydroxyl groups ; or two or more of them.

The weight ratio of polyolefin to the diluting agent may be 20:80-50:50, or 40:60-30:70. When the weight ratio of polyolefin to the diluting agent satisfies the above-defined range, the finished polyolefin porous substrate may ensure a suitable level of porosity and average pore size, and the pores may be interconnected to provide improved permeability. In addition, it is possible to prevent an increase in extrusion load to ensure an easily processable level of viscosity, and to prevent polyolefin from being extruded in the form of gel to cause the problems of breakage upon orientation and non-uniform thickness, while not being kneaded thermodynamically with the diluting agent.

The second polyolefin composition is formed into the region having a lower crosslinking degree in the above-mentioned first region and second region, after being subjected to the co-extrusion, orientation steps, or the like, as described hereinafter. Reference will be made to the above description about the types of polyolefin and diluting agent, and the weight ratio of polyolefin to the diluting agent.

When manufacturing a crosslinked structure-containing separator for a lithium secondary battery through photo-crosslinking, it is difficult to apply a photoinitiator composition containing a photoinitiator selectively in the height direction extending from one surface of the crosslinked structure-containing polyolefin porous substrate to the other surface thereof. In other words, the photoinitiator composition is applied to the whole of the crosslinked structure-containing separator for a lithium secondary battery. Therefore, when carrying out UV irradiation, direct crosslinking occurs by UV rays to a similar intensity in the height direction extending from one surface of the crosslinked structure-containing polyolefin porous substrate to the other surface thereof, and thus the crosslinked structure-containing polyolefin porous substrate has a similar crosslinking degree in the height direction extending from one surface of the crosslinked structure-containing polyolefin porous substrate to the other surface thereof, resulting in the problem in that it is difficult to retain a shutdown temperature similar to the shutdown temperature before crosslinking.

The antioxidant neutralizes free radicals formed in polyolefin chains to minimize UV crosslinking on the surface of the separator. Such antioxidants may be classified broadly into radical scavengers which react with the radicals formed in polyolefin to stabilize polyolefin, and peroxide decomposers which decompose the peroxide produced by the radicals into a stable form of molecule. The radical scavenger discharges hydrogen, stabilizes radicals, and is converted into radicals in itself. However, the radical scavenger may remain in a stable form through the resonance effect or electron rearrangement. The peroxide decomposer may realize an enhanced effect, when being used in combination with the radical scavenger.

According to the present disclosure, the second polyolefin composition includes an antioxidant so that the separator obtained by the method for manufacturing a crosslinked structure-containing separator for a lithium secondary battery according to an embodiment of the present disclosure may retain a shutdown temperature and mechanical strength similar to the shutdown temperature and mechanical strength before crosslinking, even when the photoinitiator composition is applied to the whole of the crosslinked structure-containing separator for a lithium secondary battery.

The antioxidant contained in the second polyolefin composition is present in an amount of 0.8 parts by weight or more based on 100 parts by weight of polyolefin contained in the second polyolefin composition. When the antioxidant is contained in the second polyolefin composition in an amount within the above-defined range, the first region and the second region may show a difference in crosslinking degree of 10% or more.

According to an embodiment of the present disclosure, the antioxidant contained in the second polyolefin composition may include a first antioxidant as a radical scavenger and a second antioxidant as a peroxide decomposer. When the second polyolefin composition includes the two different types of antioxidants of the first antioxidant and the second antioxidant, it is possible to prevent the second polyolefin composition from crosslinking more easily through the synergic effect of the antioxidants.

According to an embodiment of the present disclosure, the first antioxidant may include a phenolic antioxidant, an amine-based antioxidant, or a mixture thereof.

The phenolic antioxidant may include 2,6-di-t-butyl-4-methylphenol, 4,4'-thiobis(2-t-butyl-5-methylphenol), 2,2'-thiodiethylbis-[3-(3,5-di-t-butyl-4-hydroxyphenyl)propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis-[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,5H)-trione, dioctadecyl 3,3'-thiodipropionate, or two or more of them.

According to an embodiment of the present disclosure, the second antioxidant may include a phosphorus-based antioxidant, a sulfur-based antioxidant, or a mixture thereof.

The phosphorus-based antioxidant decomposes peroxide to form alcohol and is converted into phosphate. The phosphorus-based antioxidant may include 3,9-bis(2,6-dit-butyl-4-methylphenoxy)-2,4,8,10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

The sulfur-based antioxidant may include 3,3'-thiobis-1,1'-didodecyl ester, dimethyl 3,3'-thiodipropionate, dioctadecyl 3,3'-thiodipropionate, 2,2-bis{[3-(dodecylthio)-1-oxopropoxy]methyl}propane-1,3-diyl bis[3-(dodecylthio)propionate], or two or more of them.

According to an embodiment of the present disclosure, the first antioxidant may be present in an amount of 0.5 parts by weight or more, and 1.5 parts by weight or less, based on 100 parts by weight of polyolefin contained in the second polyolefin composition.

According to an embodiment of the present disclosure, the second antioxidant may be present in an amount of 0.3 parts by weight or more, or 0.5 parts by weight or more, and 0.7 parts by weight or less, based on 100 parts by weight of polyolefin contained in the second polyolefin composition.

When the first and/or the second antioxidant is present in the second polyolefin composition within the above-defined range, it is possible to provide a difference in crosslinking degree of 10% or more with ease between the first region and the second region.

Meanwhile, polyolefin may generate alkyl radicals by heat or mechanical shear stress during the processing steps, such as extrusion and orientation. The generated radicals are oxidized rapidly by oxygen and residual metal ingredients, or the like, resulting in a change in the chemical structure and physical properties of polyolefin as well as the appearance and shape of polyolefin. The antioxidant can prevent such a problem of deterioration of polyolefin, besides the above-mentioned effect. According to an embodiment of the present disclosure, an antioxidant may be further added to the first polyolefin composition in order to prevent such deterioration (decomposition, discoloration) of polyolefin.

According to an embodiment of the present disclosure, the content of the antioxidant contained in the first polyolefin composition may be 0.2 parts by weight or less, or 0.07-0.2 parts by weight. When the content of the antioxidant satisfies the above-defined range, it is possible to prevent the deterioration of the first polyolefin composition with ease, while not interrupting the crosslinking of polyolefin.

According to an embodiment of the present disclosure, the antioxidant contained in the first polyolefin composition may further include a third antioxidant as a radical scavenger and a fourth antioxidant as a peroxide decomposer. When the first polyolefin composition includes the two different types of antioxidants of the third antioxidant and the fourth antioxidant, it is possible to prevent the first polyolefin composition from deterioration more easily through the synergic effect of the antioxidants.

According to an embodiment of the present disclosure, the third antioxidant may include a phenolic antioxidant, an amine-based antioxidant, or a mixture thereof. Reference will be made to the above description about the phenolic antioxidant. The fourth antioxidant may include a phosphorus-based antioxidant, a sulfur-based antioxidant, or a mixture thereof. Reference will be made to the above description about the phosphorus-based antioxidant and the sulfur-based antioxidant.

According to an embodiment of the present disclosure, the third antioxidant may be the same type as the first antioxidant. The fourth antioxidant may be the same type as the second antioxidant.

According to an embodiment of the present disclosure, the third antioxidant may be present in an amount of 0.05-0.1 parts by weight based on 100 parts by weight of polyolefin contained in the first polyolefin composition.

According to an embodiment of the present disclosure, the fourth antioxidant may be present in an amount of 0.02-0.1 parts by weight based on 100 parts by weight of polyolefin contained in the first polyolefin composition.

When the third antioxidant and/or the fourth antioxidant is contained in the first polyolefin composition in an amount within the above-defined range, crosslinking of polyolefin is not interrupted, and the first region and the second region may show a difference in crosslinking degree of 10% or more, while preventing the first polyolefin composition from deterioration with ease.

Next, the first polyolefin composition and the second polyolefin composition are co-extruded in such a manner that the extruded product of the second polyolefin composition may be laminated on the top surface of the extruded product of the first polyolefin composition (S2).

The first polyolefin composition and the second polyolefin composition are co-extruded, while being controlled in the form of flow of the first polyolefin composition/second polyolefin composition.

According to an embodiment of the present disclosure, step (S2) may include a step of carrying out co-extrusion in such a manner that the extruded product of the first polyolefin composition, the extruded product of the second polyolefin composition and the extruded product of the first polyolefin composition may be laminated. Particularly, the co-extrusion may be carried out in such a manner that the extruded product of the second polyolefin composition may be laminated on the top surface of the extruded product of the first polyolefin composition, and the extruded product of the first polyolefin composition may be laminated on the top surface of the extruded product of the second polyolefin composition. In other words, the first polyolefin composition and the second polyolefin composition may be co-extruded, while being controlled in the form of flow of the first polyolefin composition/second polyolefin composition/first polyolefin composition.

According to another embodiment of the present disclosure, step (S2) may include a step of carrying out co-extrusion in such a manner that the extruded product of the second polyolefin composition, the extruded product of the first polyolefin composition and the extruded product of the second polyolefin composition may be laminated. Particularly, the co-extrusion may be carried out in such a manner that the extruded product of the second polyolefin composition may be laminated on one surface of the extruded product of the first polyolefin composition, and the extruded product of the second polyolefin composition may be laminated on the other surface of the extruded product of the first polyolefin composition. In other words, the first polyolefin composition and the second polyolefin composition may be co-extruded, while being controlled in the form of flow of the second polyolefin composition/first polyolefin composition/second polyolefin composition.

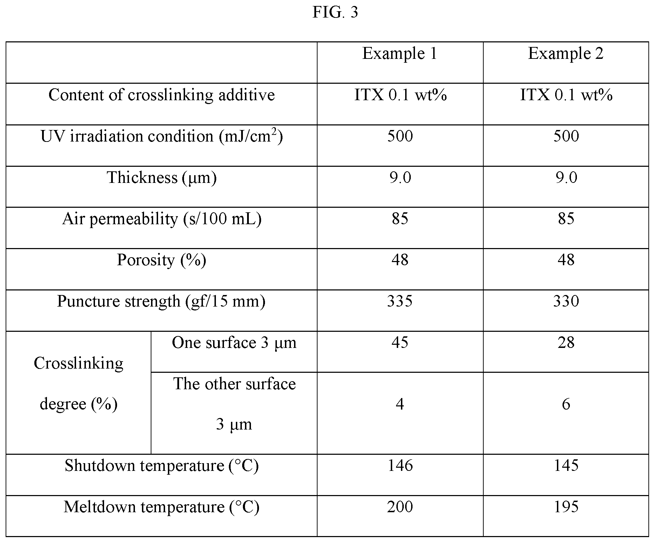

FIG. 3 illustrates the co-extrusion of a first polyolefin composition and a second polyolefin composition according to an embodiment of the present disclosure.

Referring to FIG. 3, the first polyolefin composition 100 and the second polyolefin composition 200 are co-extruded. Therefore, both sides of the second polyolefin composition 200 may be covered with the first polyolefin composition 100.

Any co-extrusion process may be used with no particular limitation, as long as it is a process used currently in the art.

Then, the resultant product of step (S2) is molded and oriented in the form of a sheet to obtain a polyolefin porous substrate (S3).

Step (S3) of carrying out molding and orientation in the form of a sheet may include the steps of: cooling the resultant product of step (S2) to form a cooled extrusion product; and biaxially orienting the cooled extrusion product in the machine direction and the transverse direction to form an oriented sheet. In other words, the co-extruded product of the first polyolefin composition and the second polyolefin composition is obtained, and then the cooled extrusion product may be formed by using a general casting or calendaring process using water-cooling or air-cooling mode. Then, the sheet is formed by carrying out orientation using the cooled extrusion product to impart a level of strength required for a separator for a lithium secondary battery.

The orientation may be carried out by sequential or simultaneous orientation using a roll or a tenter. The orientation ratio may be 3 times or more, preferably 5-10 times, each in the machine direction and transverse direction, and the total orientation ratio may be 20-80 times. When the orientation ratio satisfies the above-defined ratio, it is possible to realize sufficient orientation in both directions, while maintaining a balance of physical properties between the machine direction and the transverse direction, and to perform sufficient pore formation.

Herein, the orientation temperature may be varied with the melting point of polyolefin and the amount and type of the photoinitiator as described below. According to an embodiment of the present disclosure, the orientation temperature may be selected from a temperature range where 30-80 wt% of the crystalline segment of the polyolefin in the sheet may be molten. When the orientation temperature satisfies the above-defined range, it is possible to prevent the problem of breakage during orientation, while carrying out orientation of the polyolefin porous substrate with ease. Meanwhile, how much the crystalline segment of polyolefin is molten depending on temperature may be obtained from differential scanning calorimetry (DSC).

After that, the diluting agent is extracted from the resultant product of step (S3) in step (S4). Particularly, the diluting agent may be extracted by using an organic solvent. Herein, the organic solvent is not particularly limited, as long as it is capable of extraction of the diluting agent used for polyolefin extrusion. For example, it is suitable to use methyl ethyl ketone, methylene chloride or hexane having high extraction efficiency and showing a high drying rate.

The extraction may be carried out through any conventional solvent extraction process, such as an immersion process, a solvent spray process or an ultrasonication process, and such processes may be used alone or in combination. After carrying out extraction, the content of diluting agent remaining on the polyolefin porous substrate may be 1 wt% or less.

In addition, the extraction time may vary depending on the thickness of the resultant porous substrate. In the case of a polyolefin porous substrate having a thickness of 10-30 $\mu$m, the extraction time may be 2-4 minutes suitably.

Then, the resultant product of step (S4) is thermally fixed (S5). The thermal fixing is a process of fixing and heating the porous membrane so that the porous membrane to be shrunk may be fixed forcibly to remove residual stress.

According to an embodiment of the present disclosure, when the polyolefin is polyethylene, the thermal fixing temperature may be 100-140°C, 105-135°C, or 110-130°C. When the polyolefin is polyethylene and the thermal fixing temperature satisfies the above-defined range, polyolefin molecules may be rearranged to remove residual stress of the porous membrane, and the problem of pore blocking of the porous membrane caused by partial melting may be reduced.

According to an embodiment of the present disclosure, the thermal fixing time may be 10-120 seconds, 20-90 seconds, or 30-60 seconds. When the thermal fixing is carried out for the above-defined range of time, polyolefin molecules may be rearranged to remove residual stress of the porous membrane, and the problem of pore blocking of the porous membrane caused by partial melting may be reduced.

According to an embodiment of the present disclosure, the resultant polyolefin porous substrate may have a number of double bonds present in the polyolefin chains of 0.01 or more, and 0.5 or less, or 0.3 or less per 1000 carbon atoms, as determined by $^1$H-NMR. When the polyolefin porous substrate has the above-defined number of double bonds, it is possible to control the radicals generated by photoinitiator-induced dehydrogenation from the double bond structure present in the polyolefin chains, and thus to carry out effective crosslinking of the polyolefin porous substrate, while minimizing side-reactions caused by excessive formation of radicals. In addition, it is possible to prevent degradation of the mechanical strength of the finished crosslinked structure-containing polyolefin porous substrate with ease.

According to an embodiment of the present disclosure, the number of double bonds present in the polyolefin chains may be controlled by modifying the type, purity, addition of a linker of a catalyst used for synthesizing polyolefin, or the like.

According to an embodiment of the present disclosure, the number of double bonds present in the polyolefin chains, except the ends, may be 0.005-0.49 per 1000 carbon atoms.

According to an embodiment of the present disclosure, the polyolefin porous substrate may have a BET specific surface area of 10-27 m$^2$/g, 13-25 m$^2$/g, or 15~23 m$^2$/g. When the polyolefin porous substrate satisfies the above range of BET specific surface area, the polyolefin porous substrate has an increased surface area, and thus shows increased crosslinking efficiency, even when using a small amount of photoinitiator.

The BET specific surface area of the polyolefin porous substrate may be determined by the BET method. Particularly, the BET specific surface area of the polyolefin porous substrate may be calculated from the nitrogen gas adsorption at the temperature (77K) of liquid nitrogen by using Belsorp-II mini available from Bell Japan Inc.

After that, a photoinitiator composition containing a photoinitiator is applied to the resultant product of step (S5) in step (S6).

According to an embodiment of the present disclosure, the photoinitiator may include a Type 2 photoinitiator.

According to an embodiment of the present disclosure, the Type 2 photoinitiator may include thioxanthone (TX), a thioxanthone derivative, benzophenone (BPO), a benzophenone derivative, or a mixture of two or more of them.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

Particular examples of the benzophenone derivative may include, but are not limited to: 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3'-dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

According to an embodiment of the present disclosure, the Type 2 photoinitiator may be 2-isopropyl thioxanthone, thioxanthone or a mixture thereof. When the Type 2 photoinitiator is 2-isopropyl thioxanthone, thioxanthone or a mixture thereof, it is possible to carry out crosslinking with a lower dose, such as 500 mJ/cm$^2$, as compared to the crosslinking using any other photoinitiator, such as benzophenone.

In addition, when the photoinitiator includes 2-isopropyl thioxanthone (ITX), 2-isopropyl thioxanthone has a low melting point of about 70-80°C. Therefore, when the photo-crosslinking temperature condition is controlled to 80-100°C, mobility of the photoinitiator into the polyolefin porous substrate is generated, while 2-isopropyl thioxanthone on the surface of the polyolefin porous substrate is molten, thereby providing increased crosslinking efficiency, and preventing a change in physical properties of the finished separator with ease.

According to an embodiment of the present disclosure, the content of the photoinitiator may be 0.01-0.5 wt%, 0.03-0.3 wt%, 0.03-0.3 wt%, or 0.05-0.15 wt% based on 100 wt% of the photoinitiator composition. When the content of the photoinitiator satisfies the above-defined range, it is possible to carry out crosslinking smoothly, while preventing shrinking of the separator or the main chain scission of polyolefin, caused by rapid crosslinking upon the UV irradiation.

According to an embodiment of the present disclosure, in the step of applying the photoinitiator composition containing a photoinitiator to the resultant product of step (S5), the photoinitiator may be added to an extruder for extruding the polyolefin composition.

According to another embodiment of the present disclosure, in the step of applying the photoinitiator composition containing a photoinitiator to the resultant product of step (S5), the photoinitiator composition containing a photoinitiator and a solvent may be coated and dried on the outside of the polyolefin porous substrate to obtain a crosslinked structure-containing separator for a lithium secondary battery.

As used herein, 'coated and dried on the outside' covers that the photoinitiator composition is coated and dried on the surface of the polyolefin porous substrate, as well as another layer is formed on the polyolefin porous substrate and then the photoinitiator composition is coated and dried on the surface of another layer.

According to an embodiment of the present disclosure, the polyolefin porous substrate may be subjected to corona discharge treatment, before coating the photoinitiator composition on the polyolefin porous substrate. The corona discharge treatment may be carried out by applying high-frequency wave and high-voltage output generated by a predetermined driving circuit section between a predetermined discharge electrode and a processing roll provided in a corona discharge treatment machine. The surface of the polyolefin porous substrate is modified through the corona discharge treatment to improve the wettability of the polyolefin porous substrate with the photoinitiator composition. The corona discharge treatment may be carried out through a room-temperature plasma process.

According to an embodiment of the present disclosure, the photoinitiator may be a photoinitiator solution including a photoinitiator and a solvent.

Particular examples of the solvent include: cycloaliphatic hydrocarbons, such as cyclopentane and cyclohexane; aromatic hydrocarbons, such as toluene, xylene and ethylbenzene; ketones, such as acetone, ethyl methyl ketone, diisopropyl ketone, cyclohexanone, methylcyclohexane and ethylcyclohexane; chlorinated aliphatic hydrocarbons, such as methylene chloride, chloroform and tetrachlorocarbon; esters, such as ethyl acetate, butyl acetate, $\gamma$-butyrolactone and $\epsilon$-caprolactone; acrylonitriles, such as acetonitrile and propionitrile; ethers, such as tetrahydrofuran and ethylene glycol diethyl ether; alcohols, such as methanol, ethanol, isopropanol, ethylene glycol and ethylene glycol monomethyl ether; and amides, such as N-methyl pyrrolidone and N,N-dimethylformamide.

Non-limiting examples of the method for coating the polyolefin porous substrate with the photoinitiator solution include dip coating, die coating, roll coating, comma coating, microgravure coating, doctor blade coating, reverse roll coating, Mayer bar coating, direct roll coating, or the like.

After coating the polyolefin porous substrate with the photoinitiator solution, the drying step may be carried out by using a known process, and may be performed in a batchwise or continuous mode by using an oven or a heating chamber in a temperature range considering the vapor pressure of the solvent used herein. The drying step is for substantially removing the solvent present in the photoinitiator solution, and is preferably carried out as rapidly as possible considering productivity, or the like. For example, the drying step may be carried out for 1 minute or less, or 30 seconds or less.

According to another embodiment of the present disclosure, the photoinitiator composition may be slurry for forming an inorganic composite porous layer including an inorganic filler, a binder polymer, a photoinitiator and a solvent.

When the photoinitiator composition is slurry for forming an inorganic composite porous layer, the photoinitiator is introduced to the surface of the polyolefin porous substrate, while the photoinitiator composition is coated on the polyolefin porous substrate, and thus the polyolefin porous substrate may be crosslinked upon the irradiation with UV rays, and an inorganic composite porous layer may be formed on at least one surface of the polyolefin porous substrate at the same time.

When the slurry for forming an inorganic composite porous layer is used as a photoinitiator composition, the polyolefin porous substrate may be crosslinked by using a process for forming an inorganic composite porous layer, while avoiding an additional need for a system for applying the photoinitiator directly to the polyolefin porous substrate, such as a system for coating and drying the solution including the photoinitiator composition directly on the polyolefin porous substrate.

In addition, the slurry for forming an inorganic composite porous layer does not require any other monomer than the photoinitiator in order to crosslink the polymer chains in the polyolefin porous substrate directly. Therefore, even when the photoinitiator is incorporated to the slurry for forming an inorganic composite porous layer together with the inorganic filler and the binder polymer, there is no monomer or other ingredients interrupting the photoinitiator from reaching the surface of the polyolefin porous substrate, and thus the photoinitiator can be introduced sufficiently to the surface of the polyolefin porous substrate.

In general, the polyolefin porous polymer substrate itself and the inorganic filler have a high UV-protecting effect. Thus, when UV is irradiated after forming an inorganic composite porous layer containing the inorganic filler, irradiation dose of UV rays arriving at the polyolefin porous substrate may be reduced. However, according to the present disclosure, the polymer chains in the polyolefin porous substrate may be crosslinked directly, even when UV rays are irradiated after forming the inorganic composite porous layer.

According to an embodiment of the present disclosure, when the photoinitiator composition is the slurry for forming an inorganic composite porous layer, the photoinitiator may include 2-isopropyl thioxanthone, thioxanthone, or a mixture thereof. Particularly, 2-isopropyl thioxanthone or thioxanthone allows photo-crosslinking even under a long wavelength showing a high transmission rate. Therefore, even when the slurry for forming an inorganic composite porous layer including an inorganic filler and a binder polymer further includes the photoinitiator, the polyolefin porous substrate may be crosslinked with ease.

Reference will be made to the above description about the inorganic filler and the binder polymer.

The solvent may function as a solvent capable of dissolving the binder polymer, or as a dispersion medium not capable of dissolving the binder polymer but capable of dispersing the binder polymer, depending on the type of the binder polymer. In addition, the solvent can dissolve the photoinitiator. The solvent may have a solubility parameter similar to the solubility parameter of the binder polymer to be used and a low boiling point. This is because such a solvent allows homogeneous mixing and may be removed with ease subsequently. Non-limiting examples of the solvent are the same as described above.

Reference will be made to the above description about the solvent.

The slurry for forming an inorganic composite porous layer may be prepared by dissolving or dispersing the binder polymer in the solvent, adding the inorganic filler thereto and dispersing it therein. The inorganic filler may be added after it is pulverized in advance to a predetermined average particle diameter. Otherwise, the inorganic filler may be added to the slurry containing the binder polymer dissolved or dispersed therein, and then pulverized and dispersed, while controlling it to have a predetermined average particle diameter by using a ball milling process, or the like. Herein, the pulverization may be carried out for 1-20 hours, and the pulverized inorganic filler may have an average particle diameter within the above-defined range. The inorganic filler may be pulverized by using a conventional method, such as ball milling.

According to an embodiment of the present disclosure, the slurry for forming an inorganic composite porous layer may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the slurry for forming an inorganic composite porous layer may have a solid content of 5-60 wt%, or 30-50 wt%. When the inorganic composite porous layer has the above-defined range of solid content, it is possible to ensure coating uniformity with ease, and to prevent generation of nonuniformity, caused by flowing of slurry, or to prevent consumption of a lot of energy for drying the slurry.

According to an embodiment of the present disclosure, when the photoinitiator composition is the slurry for forming an inorganic composite porous layer, a phase separation process may be carried out after coating the photoinitiator composition on the polyolefin porous substrate. The phase separation may be carried out by humidified phase separation or dipping phase separation.

Hereinafter, humidified phase separation will be explained in more detail.

First, humidified phase separation may be carried out at a temperature of 15-70°C or 20-50°C under a relative humidity of 15-80% or 30-50%. While the slurry for forming an inorganic composite porous layer is dried, it has phase transition properties through a vapor-induced phase separation phenomenon.

To carry out humidified phase separation, a non-solvent for the binder polymer may be introduced in a gaseous state. The non-solvent for the binder polymer is not particularly limited, as long as it cannot dissolve the binder polymer and has partial miscibility with the solvent. For example, a non-solvent providing the binder polymer with a solubility of less than 5 wt% at 25°C may be used. Particular examples of the non-solvent for the binder polymer include water, methanol, ethanol, isopropanol, butanol, ethylene glycol, propylene glycol, tripropylene glycol, or two or more of them.

Hereinafter, dipping phase separation will be explained in more detail.

After coating the slurry for forming an inorganic composite porous layer on the outside of the polyolefin porous substrate, the coated substrate is dipped in a solidifying solution containing a non-solvent for the binder polymer for a predetermined time. In this manner, the binder polymer is solidified, while phase separation occurs in the coated slurry for forming an inorganic composite porous layer. In this process, a porous inorganic composite porous layer is formed. Then, the resultant product is washed with water to remove the solidifying solution, followed by drying. The drying step may be carried out by using a known process, and may be performed in a batchwise or continuous mode by using an oven or a heating chamber in a temperature range considering the vapor pressure of the solvent used herein. The drying step is for substantially removing the solvent present in the slurry, and is preferably carried out as rapidly as possible considering productivity, or the like. For example, the drying step may be carried out for 1 minute or less, or 30 seconds or less.

As the solidifying solution, the non-solvent for the binder polymer may be used alone, or a mixed solvent of the non-solvent for the binder polymer with the above-mentioned solvent may be used. When using a mixed solvent of the non-solvent for the binder polymer with the solvent, the content of the non-solvent for the binder polymer may be 50 wt% or more based on 100 wt% of the solidifying solution with a view to formation of a high-quality porous structure and improvement of productivity.

According to another embodiment of the present disclosure, in the step of applying the photoinitiator composition containing a photoinitiator to the resultant product of step (S5), slurry for forming an inorganic composite porous layer including an inorganic filler, a first binder polymer and a dispersion medium is coated on one surface of the porous polyolefin substrate, followed by drying, to form an inorganic composite porous layer, and then a coating solution for forming a porous adhesive layer including a second binder polymer, a photoinitiator and a solvent is coated on the top surface of the inorganic composite porous layer, followed by drying, to obtain a crosslinked structure-containing separator for a lithium secondary battery.

Reference will be made to the above description about the inorganic filler and the first binder polymer.

According to an embodiment of the present disclosure, the first binder polymer may be an aqueous binder polymer. Herein, the first binder polymer may be dissolved in an aqueous solvent or may be dispersed by the aqueous dispersion medium. When the first binder polymer is dispersed by the aqueous dispersion medium, the first binder polymer may be a particle-type binder polymer.

According to an embodiment of the present disclosure, the first binder polymer may not be dissolved in the solvent and the non-solvent for the second binder polymer as described hereinafter. In this case, even when the coating solution as mentioned hereinafter is applied to form a porous adhesive layer after forming the inorganic composite porous layer, the first binder solvent is not dissolved, and thus it is possible to prevent the first binder polymer dissolved in the solvent or the non-solvent for the second binder polymer from blocking the pores with ease.

The dispersion medium may function as a solvent capable of dissolving the first binder polymer, or as a dispersion medium not capable of dissolving the first binder polymer but capable of dispersing the first binder polymer, depending on the type of the first binder polymer. The dispersion medium may have a solubility parameter similar to the solubility parameter of the first binder polymer to be used and a low boiling point. In this case, the dispersion medium allows homogeneous mixing and may be removed with ease subsequently.

According to an embodiment of the present disclosure, the dispersion medium may be an aqueous dispersion medium. When the dispersion medium is an aqueous dispersion medium, it is eco-friendly, does not require an excessive heat quantity for forming and drying an inorganic composite porous layer, and does not need an additional explosion-preventing system, and thus can form an inorganic composite porous layer more easily.

Reference will be made to the above description about the slurry for forming an inorganic composite porous layer.

The slurry for forming an inorganic composite porous layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining solvent, while not adversely affecting the productivity.

Reference will be made to the above description about the second binder polymer.

The solvent may be one capable of dissolving the second binder polymer at 5 wt% or more, 15 wt% or more, or 25 wt% or more, at 25°C.

The solvent may be a non-solvent for the first binder polymer. For example, the solvent may dissolve the first binder polymer at an amount of less than 5 wt% at 25°C.

Reference will be made to the above description about the particular types of the solvent.

According to an embodiment of the present disclosure, the second binder polymer may be used in an amount of 3-30 wt%, or 5-25 wt%, based on 100 wt% of the coating solution for forming a porous adhesive layer.

Since the photoinitiator is contained in the coating solution for forming a porous adhesive layer, the photoinitiator can be introduced to the surface of the polyolefin porous substrate, while forming a porous adhesive layer at the same time, when coating the coating solution for forming a porous adhesive layer on the top surface of the inorganic composite porous layer.

While coating the coating solution for forming a porous adhesive layer, the polyolefin porous substrate is wetted with the solvent. Herein, the photoinitiator contained in the coating solution for forming a porous adhesive layer is introduced to the polyolefin porous substrate, and the polyolefin porous substrate may be photo-crosslinked by the photoinitiator present on the surface of the polyolefin porous substrate upon the UV irradiation.

In this manner, the method for manufacturing a crosslinked structure-containing separator for a lithium secondary battery according to an embodiment of the present disclosure can simplify the process in that the polyolefin porous substrate can be photo-crosslinked by using a step of forming a porous adhesive layer, while avoiding a need for a system for directly applying the photoinitiator to the polyolefin porous substrate in order to photo-crosslink the polyolefin porous substrate, for example, a system for directly coating and drying a solution containing the photoinitiator on the polyolefin porous substrate.

The method for manufacturing a crosslinked structure-containing separator for a lithium secondary battery according to an embodiment of the present disclosure does not require any other ingredient, such as a monomer for forming radicals, than the photoinitiator to perform direct crosslinking of the polymer chains in the polyolefin porous substrate. Thus, even though the photoinitiator is added to the coating solution for forming a porous adhesive layer, there is no ingredient interrupting the photoinitiator from reaching the surface of the polyolefin porous polymer substrate. As a result, the photoinitiator can be introduced sufficiently to the surface of the polyolefin porous substrate.

Additionally, in general, the polyolefin porous polymer substrate itself and the inorganic filler have a high UV-protecting effect. Thus, when UV is irradiated after forming an inorganic composite porous layer and porous adhesive layer, irradiation dose of UV rays arriving at the polyolefin porous substrate may be reduced. However, according to the present disclosure, crosslinking may be accomplished even with a low UV irradiation dose, and the polymer chains in the polyolefin porous substrate may be crosslinked directly, even when the UV is irradiated after forming the inorganic composite porous layer and porous adhesive layer.

According to an embodiment of the present disclosure, the coating solution for forming a porous coating layer may include, as a photoinitiator, isopropyl thioxanthone, thioxanthone or a mixture thereof. Particularly, 2-isopropyl thioxanthone or thioxanthone allows photo-crosslinking even under a long wavelength showing a high transmission rate. Therefore, even when UV is irradiated after forming the inorganic composite porous layer and porous adhesive layer, the polyolefin porous substrate may be crosslinked with ease.

According to an embodiment of the present disclosure, it is possible to form a pattern on the finished porous adhesive layer through the pattern coating of the coating solution for forming a porous adhesive layer on the top surface of the inorganic composite porous layer.

According to an embodiment of the present disclosure, after coating the coating solution for forming a porous adhesive layer on the top surface of the inorganic composite porous layer, phase separation may be carried out. Herein, the phase separation may be carried out by dipping phase separation.

After coating the coating solution for forming a porous adhesive layer on the top surface of the inorganic composite porous layer, the resultant product is dipped in a solidifying solution containing a non-solvent for the second binder polymer for a predetermined time. In this manner, the second binder polymer is solidified, while phase separation occurs in the coated solution for forming a porous adhesive layer. In this process, a porous adhesive layer is formed. Then, the resultant product is washed with water to remove the solidifying solution, followed by drying. The drying step may be carried out by using a known process, and may be performed in a batchwise or continuous mode by using an oven or a heating chamber in a temperature range considering the vapor pressure of the solvent used herein. The drying step is for substantially removing the solvent present in the coating solution for forming a porous adhesive layer, and is preferably carried out as rapidly as possible considering productivity, or the like. For example, the drying step may be carried out for 1 minute or less, or 30 seconds or less.

As the solidifying solution, the non-solvent for the second binder polymer may be used alone, or a mixed solvent of the non-solvent for the second binder polymer with the above-mentioned solvent may be used. When using a mixed solvent of the non-solvent for the second binder polymer with the solvent, the content of the non-solvent for the second binder polymer may be 50 wt% or more based on 100 wt% of the solidifying solution with a view to formation of a high-quality porous structure and improvement of productivity.

While the second binder polymer is solidified, the second binder polymer is condensed. Thus, it is possible to prevent the second binder polymer from infiltrating to the surface and/or inner part of the polyolefin porous substrate, and to prevent an increase in resistance of the separator. In addition, the adhesive layer including the second binder polymer becomes a porous layer to improve the resistance of the separator.

The non-solvent for the second binder polymer may dissolve the second binder polymer at an amount of less than 5 wt% at 25°C.

The non-solvent for the second binder polymer may also be a non-solvent for the first binder polymer. For example, the non-solvent for the second binder polymer may dissolve the first binder polymer at an amount of less than 5 wt% at 25°C.

According to an embodiment of the present disclosure, particular examples of the non-solvent for the second binder polymer include water, methanol, ethanol, propyl alcohol, butyl alcohol, butanediol, ethylene glycol, propylene glycol, tripropylene glycol, or two or more of them.

According to an embodiment of the present disclosure, the dipping time may be 3 seconds to 1 minute. When the dipping time satisfies the above-defined range, phase separation occurs suitably to ensure the adhesion between the inorganic composite porous layer and the porous adhesive layer and to prevent interlayer separation of the adhesive layer with ease.

According to an embodiment of the present disclosure, the coating solution for forming a porous adhesive layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining dispersion medium, while not adversely affecting the productivity

As a result, the inorganic composite porous layer and the porous adhesive layer are formed individually through a separate step according to the method for manufacturing a crosslinked structure-containing separator for a lithium secondary battery according to an embodiment of the present disclosure, and thus the porous adhesive layer may be formed with various forms. For example, the porous adhesive layer may be formed as a patterned layer with ease.

Then, UV is irradiated to the resultant product of step (S6), in step (S7). As UV rays are irradiated, the polymer chains in the polyolefin porous substrate are crosslinked to obtain a crosslinked structure-containing polyolefin porous substrate.

UV irradiation is carried out by using a UV curing system, while controlling UV irradiation time and irradiation dose adequately considering the content of the photoinitiator, or the like. For example, the UV irradiation time and irradiation dose may be set under such a condition that the polyolefin chains in the polyolefin porous substrate may be crosslinked sufficiently to ensure a desired level of heat resistance, while preventing the polyolefin porous substrate from being damaged by the heat generated by the UV lamp. In addition, the UV lamp used for the UV curing system may be selected suitably from a high-temperature mercury lamp, metal lamp, gallium lamp, or the like, depending on the photoinitiator used herein, and the light emission wavelength and dose of the UV lamp may be selected suitably depending on the process.

The method for manufacturing a crosslinked structure-containing separator for a lithium secondary battery according to an embodiment of the present disclosure can perform photo-crosslinking of the polymer chains in the polyolefin porous substrate even with a significantly smaller UV irradiation light dose as compared to the light dose used for general photo-crosslinking. Therefore, it is possible to increase the applicability of the crosslinked structure-containing separator for a lithium secondary battery to a mass production process. For example, the UV light dose may be 10-1000 $mJ/cm^2$, 50-1000 $mJ/cm^2$, or 150-500 $mJ/cm^2$.

According to an embodiment of the present disclosure, 'UV light dose' may be determined by using a portable light dose measuring instrument called UV power puck available from Miltec. When determining light dose by using H type UV bulb available from Miltec, three types of wavelength values of UVA, UVB and UVC are derived depending on wavelength, and UV rays used herein corresponds to UVA.

According to the present disclosure, the method for determining 'UV light dose' includes passing UV power puck through a conveyer in the presence of a light source under the same condition as a sample, and the UV light dose value displayed in UV power puck is defined as 'UV light dose'.

When manufacturing a separator for a lithium secondary battery by using a silane crosslinking agent according to the related art, polyolefin chain scission occurs as a side reaction, in addition to silane graft reaction, to cause degradation of mechanical strength. In addition, gel may be formed by the side reaction of the silane crosslinking agent in itself.

On the other hand, the separator for a lithium secondary battery obtained by the method for manufacturing a separator for a lithium secondary battery according to an embodiment of the present disclosure as described above does not cause the above-mentioned problems, and thus shows improved mechanical strength as compared to the separator for a lithium secondary battery obtained by using a silane crosslinking agent.

In addition, according to the method for manufacturing a separator for a lithium secondary battery according to an embodiment of the present disclosure as described above, it is possible to obtain a separator for a lithium secondary battery having a high meltdown temperature and a low shutdown temperature.

The separator for a lithium secondary battery as described above may be interposed between a positive electrode and a negative electrode to obtain a lithium secondary battery.

The lithium secondary battery may have various shapes, such as a cylindrical shape, prismatic shape, pouch-like shape, or the like.

The lithium secondary battery may include a lithium metal secondary battery, a lithium-ion secondary battery, a lithium polymer secondary battery, a lithium-ion polymer secondary battery, or the like.

The electrodes used in combination with the separator according to the present disclosure are not particularly limited, and may be obtained by allowing electrode active materials to be bound to an electrode current collector through a method generally known in the art.

Among the electrode active materials, non-limiting examples of a positive electrode active material include, but are not limited to: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiVsOs$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_3$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; $Fe_2(MoO_4)_3$; or the like.

Non-limiting examples of a negative electrode active material include conventional negative electrode active materials that may be used for the negative electrode for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of a positive electrode current collector include foil made of aluminum, nickel or a combination thereof. Non-limiting examples of a negative electrode current collector include foil made of copper, gold, nickel, nickel alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between an active material and a conductive material and binding to a current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, $\gamma$-butyrolactone, 1,2-dimethoxyethane, tetrahydrofuran, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidine, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociatable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the separator for a secondary battery may be applied to a battery through lamination, stacking and folding of the separator with electrodes, besides a conventional process, winding.

According to an embodiment of the present disclosure, the separator for a secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, jelly-roll type, stacked-folded type, laminated-stacked type, or the like.

## MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 30 parts by weight of high-density polyethylene (Korea Petrochemical Ind. Co. Ltd., VH035) having a weight average molecular weight of 300,000, as polyolefin, was mixed with 70 parts by weight of liquid paraffin oil (Kukdong Oil & Chem. LP350) as a diluting agent to prepare a first polyolefin composition.

Next, 30 parts by weight of high-density polyethylene (Korea Petrochemical Ind. Co. Ltd., VH035) having a weight average molecular weight of 300,000, as polyolefin, 70 parts by weight of liquid paraffin oil (Kukdong Oil & Chem.

LP350) as a diluting agent, 0.15 parts by weight of pentaerythritol tetrakis[3-(3,5-di-t-butyl-4-hydroxyphenyl)propionate] (BASF, Irganox 1010) as a first antioxidant, and 0.09 parts by weight of tris(2,4-di-t-butylphenyl) phosphite (BASF, Irgafos 168) as a second antioxidant were mixed to prepare a second polyolefin composition.

The first polyolefin composition and the second polyolefin composition were co-extruded to form a flow in the form of the first polyolefin composition/second polyolefin composition in a manifold, and molded into a sheet-like shape through a T-die and cold casting roll. Then, biaxial orientation was carried out by using a tenter-type sequential orientation machine performing MD orientation and then TD orientation to obtain a polyolefin porous substrate. Herein, each of the MD orientation ratio and the TD orientation ratio was 5.5. The orientation temperature was 108°C in MD and 123°C in TD.

Then, liquid paraffin oil was extracted from the obtained composite sheet by using methylene chloride, and thermal fixing was carried out at 127°C to obtain a polyolefin porous substrate.

In addition, 0.1 wt% of 2-isopropyl thioxanthone (Sigma Aldrich) was added to acetone to prepare a photoinitiator composition.

The photoinitiator composition was coated on both surfaces of the polyethylene porous substrate having a size of 6 cm x 15 cm at 23°C under a relative humidity of 42% to a total coating amount of 13.5 $g/m^2$, and the dried at 25°C for 1 minute.

Then, a high-pressure mercury lamp (high-temperature mercury lamp available from Lichtzen, LH-250/800-A) was used to irradiate UV rays at an accumulated light dose of 500 $mJ/cm^2$ and UV irradiation intensity of 80% of the UV light source with a processing line speed of 10 m/min to obtain a crosslinked structure-containing polyolefin porous substrate.

**Example 2**

A crosslinked structure-containing polyolefin porous substrate was obtained in the same manner as Example 1, except that 0.03 parts by weight of pentraerythritol tetrakis[3-(3,5-di-tert-butyl-4-hydroxyphenyl)propionate (BASF, Irganox 1010) as a third antioxidant and 0.03 parts by weight of tris(2,4-di-t-butylphenyl)phosphite (BASF, Irgafos 168) as a fourth antioxidant were further added to prepare a first polyolefin composition.

**Example 3**

A crosslinked structure-containing polyolefin porous substrate was obtained in the same manner as Example 1, except that the first polyolefin composition and the second polyolefin composition were coextruded to form a flow controlled in the form of the first polyolefin composition/second polyolefin composition/first polyolefin composition in a manifold, thereby providing a polyolefin porous substrate.

**Example 4**

A crosslinked structure-containing polyolefin porous substrate was obtained in the same manner as Example 2, except that the first polyolefin composition and the second polyolefin composition were coextruded to form a flow controlled in the form of the first polyolefin composition/second polyolefin composition/first polyolefin composition in a manifold, thereby providing a polyolefin porous substrate.

**Example 5**

A crosslinked structure-containing polyolefin porous substrate was obtained in the same manner as Example 4, except that 0.3 parts by weight of pentraerythritol tetrakis[3-(3,5-di-tert-butyl-4-hydroxyphenyl)propionate (BASF, Irganox 1010) as a first antioxidant and 0.18 parts by weight of tris(2,4-di-t-butylphenyl)phosphite (BASF, Irgafos 168) as a second antioxidant were added to prepare a second polyolefin composition.

**Comparative Example 1**

A polyethylene porous film (Toray, porosity: 45%) having a thickness of 9 µm was used without any further treatment.

**Comparative Example 2**

A polyolefin porous substrate was obtained in the same manner as Example 4, except that 0.03 parts by weight of pentraerythritol tetrakis[3-(3,5-di-tert-butyl-4-hydroxyphenyl)propionate (BASF, Irganox 1010) as a first antioxidant and 0.03 parts by weight of tris(2,4-di-t-butylphenyl)phosphite (BASF, Irgafos 168) as a second antioxidant were added to prepare a second polyolefin composition, no photoinitiator composition was used, and UV irradiation was not carried out.

**Comparative Example 3**

A crosslinked structure-containing polyolefin porous substrate was obtained in the same manner as Example 4, except that the first polyolefin composition and the second polyolefin composition include no antioxidant.

**Comparative Example 4**

A crosslinked structure-containing polyolefin porous substrate was obtained in the same manner as Example 4, except that 0.03 parts by weight of pentaerythritol tetrakis[3-(3,5-di-tert-butyl-4-hydroxyphenyl)propionate (BASF, Irganox 1010) as a first antioxidant and 0.03 parts by weight of tris(2,4-di-t-butylphenyl)phosphite (BASF, Irgafos 168) as a second antioxidant were added to prepare a second polyolefin composition.

**Comparative Example 5**

A crosslinked structure-containing polyolefin porous substrate was obtained in the same manner as Example 5, except that 0.3 parts by weight of pentaerythritol tetrakis[3-(3,5-di-tert-butyl-4-hydroxyphenyl)propionate (BASF, Irganox 1010) as a third antioxidant and 0.18 parts by weight of tris(2,4-di-t-butylphenyl)phosphite (BASF, Irgafos 168) as a fourth antioxidant were added to prepare a first polyolefin composition.

**Comparative Example 6**

First, 30 parts by weight of high-density polyethylene (Korea Petrochemical Ind. Co. Ltd., VH035) having a weight average molecular weight of 300,000, as polyolefin, was mixed with 70 parts by weight of liquid paraffin oil (Kukdong Oil & Chem. LP350) as a diluting agent, 0.01 parts by weight of 2,5-dimethyl-2,5-di(tert-butylperoxy)hexane (Sigma-Aldrich, Luperox 101) as an initiator, 0.3 parts by weight of vinyltrimethoxysilane as a carbon-carbon double bond-containing alkoxysilane, and 0.01 parts by weight of dibutyltin dilaurate (Sigma-Aldrich) as a crosslinking catalyst to prepare a first polyolefin composition.

Next, 30 parts by weight of high-density polyethylene (Korea Petrochemical Ind. Co. Ltd., VH035) having a weight average molecular weight of 300,000, as polyolefin, 70 parts by weight of liquid paraffin oil (Kukdong Oil & Chem. LP350) as a diluting agent, 0.03 parts by weight of pentaerythritol tetrakis[3-(3,5-di-t-butyl-4-hydroxyphenyl)propionate] (BASF, Irganox 1010) as a first antioxidant, and 0.03 parts by weight of tris(2,4-di-t-butylphenyl) phosphite (BASF, Irgafos 168) as a second antioxidant were mixed to prepare a second polyolefin composition.

The first polyolefin composition was introduced to a biaxial extruder having an LID value of 56 and kneaded therein, and reactive extrusion was carried out at the same time at a temperature of 200°C to prepare a silane-grafted polyethylene composition.

The silane-grafted polyethylene composition and the second polyolefin composition were co-extruded to form a flow in the form of the silane-grafted polyethylene composition/second polyolefin composition/silane-grafted polyethylene composition in a manifold, and molded into a sheet-like shape through a T-die and cold casting roll. Then, biaxial orientation was carried out by using a tenter-type sequential orientation machine performing MD orientation and then TD orientation to obtain a polyolefin porous substrate. Herein, each of the MD orientation ratio and the TD orientation ratio was 5.5. The orientation temperature was 108°C in MD and 123°C in TD.

Then, the diluting agent was extracted from the polyolefin porous substrate by using methylene chloride, and the resultant product was allowed to stand in a constant-temperature constant-humidity chamber at 80°C and a humidity of 90% to perform crosslinking, thereby providing a crosslinked structure-containing polyolefin porous substrate.

The following Table 1 and Table 2 show the content of antioxidant in each region of the separator obtained according to each of Examples 1-5 and Comparative Examples 1-6.

In each Table, the content of antioxidant in the first region is represented by the content of the third antioxidant/content of the fourth antioxidant, and the content of antioxidant in the second region is represented by the content of the first antioxidant/content of the second antioxidant.

[Table 1]

| | Example 1 | Example 2 |
|---|---|---|
| Content of antioxidant of first polyolefin composition (based on 30 parts by weight of polyolefin) | - | 0.03/0.03 |

(continued)

|  | Example 1 | Example 2 |
|---|---|---|
| Content of antioxidant of second polyolefin composition (based on 30 parts by weight of polyolefin) | 0.15/0.09 | 0.15/0.09 |

[Table 2]

|  | Ex. 3 | Ex. 4 | Ex. 5 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Content of antioxidant of first polyolefin composition (based on 30 parts by weight of polyolefin) | - | 0.03/ 0.03 | 0.03/ 0.03 | - | 0.03/ 0.03 | - | 0.03/ 0.03 | 0.3/ 0.18 | - |
| Content of antioxidant of second polyolefin composition (based on 30 parts by weight of polyolefin) | 0.15/ 0.09 | 0.15/ 0.09 | 0.3/ 0.18 | - | 0.03/ 0.03 | - | 0.03/ 0.03 | 0.3/ 0.18 | 0.03/ 0.03 |

**Test Example** 1: **Determination of Physical Properties of Crosslinked Structure-Containing Polyolefin Porous Substrate**

Each of the separators according to Examples 1-5 and Comparative Examples 1-6 was determined in terms of thickness, air permeability, porosity, puncture strength, shutdown temperature, meltdown temperature, and crosslinking degree depending in thickness. The results are shown in the following Table 3 and Table 4.

(1) Evaluation of Air Permeability

Air permeability (Gurley) was determined according to the method of ASTM D726-94. Gurley used herein refers to the resistance of a separator against air flow and was determined by using Gurley densometer.
The air permeability value defined herein is expressed by the time (second), i.e. air permeation time, required for 100 mL of air to pass through the section of 1 in$^2$ of a separator under a pressure of 12.2 inH$_2$O.

(2) Evaluation of Porosity

Porosity was determined by measuring the width/length/thickness of a polyolefin porous substrate to calculate the volume, measuring the weight, and then calculating the ratio of the volume 100% of which is occupied by the polyolefin porous substrate based on the weight.

$$\text{Porosity (\%) of polyolefin porous substrate} = 100 \times (1 - \text{polyolefin porous substrate sample weight} / (\text{width (50 mm) of polyolefin porous substrate sample} \times \text{length (50 mm) of polyolefin porous substrate sample} \times \text{thickness of polyolefin porous substrate sample} \times \text{density of polyolefin porous substrate}))$$

(3) Evaluation of Puncture Strength

A specimen having a size of 50 mm x 50 mm was prepared.
According to ASTM D2582, a round tip having a diameter of 1 mm was allowed to operate at a rate of 120 mm/min, and puncture strength was determined.

(4) Evaluation of Shutdown Temperature

The shutdown temperature was determined by fixing a polyolefin porous substrate in an air permeability tester and measuring the air permeability, while the polyolefin porous substrate was heated at a rate of 5°C/min. The air permeability was determined by measuring the time (sec) required for 100 mL of air to pass through a polyolefin porous substrate under a constant pressure of 0.05 MPa by using an air permeability tester (Asahi Seiko, Model name: EG01-55-1MR). The shutdown temperature was defined as a temperature where the polyolefin porous substrate undergoes a rapid increase in air permeability.

(5) Evaluation of Meltdown Temperature

The meltdown temperature was determined by taking each of the samples in the machine direction (MD) and analyzing each sample through thermomechanical analysis (TMA). Particularly, a sample having a size of width x length of 4.5 mm x 8 mm was introduced to a TMA instrument (TA Instrument, Q400) and warmed from a temperature of 30°C to 220°C at a heating rate of 5°C/min, while applying a tension of 0.01 N thereto. As the temperature was increased, the sample showed a change in length. Then, the temperature at which point the sample was broken after a rapid increase in length was measured.

(6) Determination of Crosslinking Degree Depending on Thickness

The polyolefin porous substrate according to each of Examples 1 and 2 was peeled in a portion with a thickness of 3 $\mu$m from one surface of the polyolefin porous substrate in a height direction extending from one surface to the other surface thereof to determine the crosslinking degree.
In addition, the polyolefin porous substrate was peeled in a portion with a thickness of 3 $\mu$m from the other surface of the polyolefin porous substrate in a height direction extending from the other surface to one surface thereof to determine the crosslinking degree.
Further, the polyolefin porous substrate according to each of Examples 3-5 and Comparative Examples 1-6 was peeled in a portion with a thickness of 4 $\mu$m from one surface of the polyolefin porous substrate in a height direction extending from one surface to the other surface thereof, and then the crosslinking degree of the non-peeled portion was determined. Then, the peeled substrate was further peeled in a portion with a thickness of 2 $\mu$m from one surface of the polyolefin porous substrate in a height direction extending from one surface to the other surface thereof to determine the crosslinking degree of each of the peeled portion and non-peeled portion.
The crosslinking degree was calculated according to the following formula:

$$\text{Crosslinking degree (\%)} = 100 \text{ X (B/A),}$$

wherein A represents the weight of a portion remaining after peeling a portion with a thickness of 3 $\mu$m from one surface, a portion with a thickness of 3 $\mu$m from the other surface, a portion with a thickness of 2 $\mu$m from one surface, a portion with a thickness of 4 $\mu$m from one surface, or a portion with a thickness of 4 $\mu$m from one surface; and B represents the dry weight, obtained by dipping a portion remaining after peeling a portion with a thickness of 3 $\mu$m from one surface, a portion with a thickness of 3 $\mu$m from the other surface, a portion with a thickness of 2 $\mu$m from one surface, a portion with a thickness of 4 $\mu$m from one surface, or a portion with a thickness of 4 $\mu$m from one surface in 70g of trichlorobenzene at 135°C, allowing the mixture to stand at 135°C for 20 hours, filtering the mixture through a 100-mesh iron net, collecting the insoluble content on the iron net, and carrying out vacuum drying.

[Table 3]

|  | Example 1 | Example 2 |
| --- | --- | --- |
| Content of crosslinking additive | ITX 0.1 wt% | ITX 0.1 wt% |
| UV irradiation condition (mJ/cm$^2$) | 500 | 500 |
| Thickness ($\mu$m) | 9.0 | 9.0 |
| Air permeability (s/100 mL) | 85 | 85 |
| Porosity (%) | 48 | 48 |

(continued)

|  |  | Example 1 | Example 2 |
|---|---|---|---|
| Puncture strength (gf/15 mm) |  | 335 | 330 |
| Crosslinking degree (%) | One surface 3 μm | 45 | 28 |
|  | The other surface 3 μm | 4 | 6 |
| Shutdown temperature (°C) |  | 146 | 145 |
| Meltdown temperature (°C) |  | 200 | 195 |

[Table 4]

| | | Ex. 3 | Ex. 4 | Ex. 5 | Comp . Ex. 1 | Comp . Ex. 2 | Comp . Ex. 3 | Comp . Ex. 4 | Comp . Ex. 5 | Comp . Ex. 6 |
|---|---|---|---|---|---|---|---|---|---|---|
| Content of crosslinking additive | | ITX 0.1 wt% | ITX 0.1 wt% | ITX 0.1 wt% | - | - | ITX 0.1 wt% | ITX 0.1 wt% | ITX 0.1 wt% | - |
| UV irradiation condition (mJ/cm$^2$) | | 500 | 500 | 500 | - | - | 500 | 500 | 500 | - |
| Thickness ($\mu$m) | | 9.0 | 9.0 | 9.0 | 9.0 | 9.0 | 9.0 | 9.0 | 9.0 | 9.0 |
| Air permeability (s/100 mL) | | 85 | 85 | 85 | 85 | 85 | 85 | 85 | 85 | 88 |
| Porosity (%) | | 48 | 48 | 48 | 48 | 48 | 48 | 48 | 48 | 48 |
| Puncture strength (gf/15 mm) | | 330 | 335 | 330 | 350 | 340 | 310 | 310 | 345 | 280 |
| Crosslink!ng degree (%) | First region | 39 | 30 | 32 | 0 | 0 | 43 | 68 | 8 | 40 |
| | Second region | 6 | 8 | 3 | 0 | 0 | 40 | 60 | 4 | 0 |
| | Third region | 39 | 30 | 32 | 0 | 0 | 43 | 68 | 8 | 40 |
| Shutdown temperature (°C) | | 145 | 146 | 145 | 145 | 145 | 150 | 150 | 147 | 144 |
| Meltdown temperature (°C) | | 190 | 198 | 197 | 148 | 148 | 199 | >200 | 153 | 180 |

As can be seen from Table 3 and Table 4, the crosslinked structure-containing polyolefin porous substrate according to each of Examples 1-5 includes 0.8 parts by weight or more of antioxidant based on 100 parts by weight of polyolefin contained in the second polyolefin composition and is crosslinked by UV rays. Therefore, it can be seen that the crosslinked structure-containing polyolefin porous substrate is provided with the first region and the second region showing a difference in crosslinking degree of 10% or more, and thus shows a significantly high meltdown temperature, while maintaining a similar shutdown temperature as compared to the polyolefin porous substate before crosslinking, i.e. Comparative Example 1.

On the contrary, in the case of the crosslinked structure-containing polyolefin porous substrate according to Comparative Example 2, the first polyolefin composition and the second polyolefin composition include an antioxidant, but no UV crosslinking is carried out. Therefore, it can be seen that the meltdown temperature of the crosslinked structure-containing polyolefin porous substrate is not increased as compared to the polyolefin porous substate before crosslinking, i.e. Comparative Example 1.

In the case of the separators according to Comparative Examples 3 and 4, the second polyolefin composition includes no antioxidant, or includes less than 0.8 parts by weight of antioxidant based on 100 parts by weight of polyolefin contained in the second polyolefin composition. Therefore, it can be seen that the crosslinked structure-containing polyolefin porous substrate is not provided with regions showing a difference in crosslinking degree of 10% or more, and thus has a higher meltdown temperature as compared to the polyolefin porous substate before crosslinking, i.e. Comparative Example 1, but shows a shutdown temperature increased as compared to the shutdown temperature before crosslinking and causes degradation of mechanical strength.

In the case of the crosslinked polyolefin porous substrate according to Comparative Example 5, the content of antioxidant contained in the first polyolefin composition is larger than 0.2 parts by weight based on 100 parts by weight of polyolefin contained in the first polyolefin composition. Therefore, it can be seen that the crosslinked polyolefin porous substrate is not crosslinked sufficiently, and thus the meltdown temperature is not increased significantly.

In the case of the crosslinked structure-containing polyolefin porous substrate according to Comparative Example 6, it is manufactured through a silane crosslinking process. Therefore, it can be seen that the crosslinked structure-containing polyolefin porous substrate shows a change in puncture strength of more than 10% based on the puncture strength of the polyolefin porous substate before crosslinking, i.e. Comparative Example 1, and causes significant degradation of mechanical strength, as compared to the crosslinked structure-containing polyolefin porous substrate according to each of Examples 1-5.

**Test Example 2: Analysis of Shutdown Temperature and Meltdown temperature of Crosslinked Structure-Containing Polyolefin Porous Substrate**

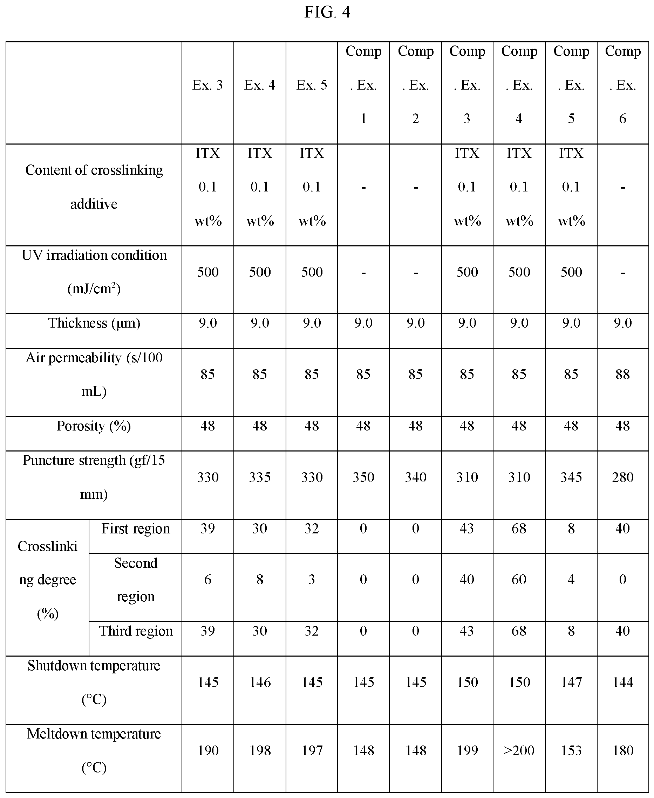

In addition, the separator according to each of Examples 4 and 5 and the separator according to each of Comparative Examples 2 and 4 were determined in terms of a change in air permeability depending on a change in temperature. The results are shown in FIG. 4.

The change in air permeability of the separator was determined at a time interval of 10 seconds, while increasing the temperature by 5°C.

As can be seen from FIG. 4, the separator according to each of Examples 4 and 5 and Comparative Example 2 shows a rapid increase in air permeability at around 145°C. This is because the shutdown temperature of the separator according to each of Examples 4 and 5 and Comparative Example 2 corresponds to about 145°C, and thus the pores of the separator are blocked at this temperature, resulting in an increase in air permeability.

On the contrary, it can be seen that the separator according to Comparative Example 4 shows a rapid increase in air permeability at around 150°C. This is because the shutdown temperature of the separator according to Comparative Example 4 corresponds to about 150°C, and thus the pores of the separator are blocked at this temperature, resulting in an increase in air permeability.

In addition, it can be seen that the separator according to Comparative Example 2 shows a low meltdown temperature of 150°C or lower, and thus is broken at around 150°C.

On the contrary, the separator according to each of Examples 4 and 5 shows a significantly high meltdown temperature of about 200°C, and thus is broken at around 200°C.

**Claims**

1. A crosslinked structure-containing polyolefin porous substrate having a crosslinked structure comprising polymer chains interconnected directly with one another,

   wherein the polyolefin porous substrate comprises, in a height direction extending from one surface to the other surface, a first region contacted with one surface and a second region extended from the outside of the first region toward the other surface, and

polyolefin contained in the first region and polyolefin contained in the second region show a difference in crosslinking degree of 10% or more.

2. The crosslinked structure-containing polyolefin porous substrate according to claim 1, which further comprises a third region extended from the outside of the second region toward the other surface, and
polyolefin contained in the second region and polyolefin contained in the third region show a difference in crosslinking degree of 10% or more.

3. The crosslinked structure-containing polyolefin porous substrate according to claim 1, wherein polyolefin contained in the first region and polyolefin contained in the second region show a difference in crosslinking degree of 20% or more.

4. The crosslinked structure-containing polyolefin porous substrate according to claim 1, wherein polyolefin contained in the first region has a higher crosslinking degree as compared to polyolefin contained in the second region.

5. The crosslinked structure-containing polyolefin porous substrate according to claim 1, wherein polyolefin contained in the first region has a crosslinking degree of 20% or more.

6. The crosslinked structure-containing polyolefin porous substrate according to claim 1, wherein polyolefin contained in the first region has a crosslinking degree of 30% or more.

7. The crosslinked structure-containing polyolefin porous substrate according to claim 1, wherein polyolefin contained in the second region has a crosslinking degree of 0.1-10%.

8. The crosslinked structure-containing polyolefin porous substrate according to claim 1, wherein the first region has a thickness corresponding to 10-80% based on the total thickness of the polyolefin porous substrate.

9. The crosslinked structure-containing polyolefin porous substrate according to claim 2, wherein polyolefin contained in the second region and polyolefin contained in the third region show a difference in crosslinking degree of 20% or more.

10. The crosslinked structure-containing polyolefin porous substrate according to claim 2, wherein polyolefin contained in the third region has a higher crosslinking degree as compared to polyolefin contained in the second region.

11. The crosslinked structure-containing polyolefin porous substrate according to claim 2, wherein polyolefin contained in the third region has a crosslinking degree of 20% or more.

12. The crosslinked structure-containing polyolefin porous substrate according to claim 2, wherein polyolefin contained in the third region has a crosslinking degree of 30% or more.

13. The crosslinked structure-containing polyolefin porous substrate according to claim 2, wherein the second region has a thickness corresponding to 10-60% based on the total thickness of the polyolefin porous substrate.

14. The crosslinked structure-containing polyolefin porous substrate according to claim 1, which shows a change in puncture strength of 10% or less, as compared to the polyolefin porous substrate before crosslinking.

15. A crosslinked structure-containing separator for a lithium secondary battery comprising the crosslinked structure-containing polyolefin porous substrate as defined in any one of claims 1 to 14.

16. The crosslinked structure-containing separator for a lithium secondary battery according to claim 15, which further comprises an inorganic composite porous layer disposed on at least one surface of the crosslinked structure-containing polyolefin porous substrate and comprising an inorganic filler and a binder polymer.

17. The crosslinked structure-containing separator for a lithium secondary battery according to claim 15, which further comprises:

an inorganic composite porous layer disposed on at least one surface of the crosslinked structure-containing polyolefin porous substrate, and comprising an inorganic filler and a first binder polymer; and

a porous adhesive layer disposed on the inorganic composite porous layer, and comprising a second binder polymer.

18. The crosslinked structure-containing separator for a lithium secondary battery according to claim 15, which shows a meltdown temperature of 160°C or higher.

19. The crosslinked structure-containing separator for a lithium secondary battery according to claim 15, which shows a shutdown temperature of 146°C or lower.

20. A method for manufacturing the crosslinked structure-containing polyolefin porous substrate as defined in claim 1, comprising the steps of:

(S1) preparing a first polyolefin composition comprising polyolefin and a diluting agent, and a second polyolefin composition comprising polyolefin, a diluting agent and an antioxidant;

(S2) co-extruding the first polyolefin composition and the second polyolefin composition in such a manner that the extruded product of the second polyolefin composition may be laminated on the top surface of the extruded product of the first polyolefin composition;

(S3) molding and orienting the resultant product of step (S2) in the form of a sheet to obtain a polyolefin porous substrate;

(S4) extracting the diluting agent from the resultant product of step (S3);

(S5) thermally fixing the resultant product of step (S4);

(S6) applying a photoinitiator composition comprising a photoinitiator to the resultant product of step (S5); and

(S7) irradiating UV rays to the resultant product of step (S6),

wherein the antioxidant is present in an amount of 0.8 parts by weight or more based on 100 parts by weight of polyolefin contained in the second polyolefin composition.

21. The method for manufacturing the crosslinked structure-containing polyolefin porous substrate according to claim 20, wherein the antioxidant comprises a first antioxidant as a radical scavenger and a second antioxidant as a peroxide decomposer.

22. The method for manufacturing the crosslinked structure-containing polyolefin porous substrate according to claim 21, wherein the first antioxidant is present in an amount of 0.5 parts by weight or more based on 100 parts by weight of polyolefin contained in the second polyolefin composition.

23. The method for manufacturing the crosslinked structure-containing polyolefin porous substrate according to claim 21, wherein the second antioxidant is present in an amount of 0.3 parts by weight or more based on 100 parts by weight of polyolefin contained in the second polyolefin composition.

24. The method for manufacturing the crosslinked structure-containing polyolefin porous substrate according to claim 20, wherein the first polyolefin composition further comprises an antioxidant.

25. The method for manufacturing the crosslinked structure-containing polyolefin porous substrate according to claim 24, wherein the antioxidant is present in an amount of 0.2 parts by weight or less.

26. The method for manufacturing the crosslinked structure-containing polyolefin porous substrate according to claim 24, wherein the antioxidant is present in an amount of 0.07-0.2 parts by weight.

27. The method for manufacturing the crosslinked structure-containing polyolefin porous substrate according to claim 24, wherein the antioxidant contained in the first polyolefin composition comprises a third antioxidant as a radical scavenger and a fourth antioxidant as a peroxide decomposer.

28. The method for manufacturing the crosslinked structure-containing polyolefin porous substrate according to claim 27, wherein the third antioxidant is present in an amount of 0.05-0.1 parts by weight based on 100 parts by weight of polyolefin contained in the first polyolefin composition.

29. The method for manufacturing the crosslinked structure-containing polyolefin porous substrate according to claim 27, wherein the fourth antioxidant is present in an amount of 0.02-0.1 parts by weight based on 100 parts by weight of polyolefin contained in the first polyolefin composition.

30. The method for manufacturing the crosslinked structure-containing polyolefin porous substrate according to claim 20, wherein step (S2) comprises carrying out co-extrusion in such a manner that the extruded product of the first polyolefin composition, the extruded product of the second polyolefin composition and the extruded product of the first polyolefin composition may be laminated.

31. The method for manufacturing the crosslinked structure-containing polyolefin porous substrate according to claim 20, wherein the photoinitiator comprises a Type 2 photoinitiator.

32. The method for manufacturing the crosslinked structure-containing polyolefin porous substrate according to claim 20, wherein the photoinitiator comprises thioxanthone (TX), a thioxanthone derivative, benzophenone (BPO), a benzophenone derivative, or two or more of them.

33. The method for manufacturing the crosslinked structure-containing polyolefin porous substrate according to claim 20, wherein the amount of the photoinitiator is 0.01-0.5 wt% based on 100 wt% of the photoinitiator composition.

34. The method for manufacturing the crosslinked structure-containing polyolefin porous substrate according to claim 21, wherein the first antioxidant comprises a phenolic antioxidant, an amine-based antioxidant, or a mixture thereof.

35. The method for manufacturing the crosslinked structure-containing polyolefin porous substrate according to claim 21, wherein the second antioxidant comprises a phosphorus-based antioxidant, a sulfur-based antioxidant, or a mixture thereof.

36. The method for manufacturing the crosslinked structure-containing polyolefin porous substrate according to claim 27, wherein the third antioxidant comprises a phenolic antioxidant, an amine-based antioxidant, or a mixture thereof.

37. The method for manufacturing the crosslinked structure-containing polyolefin porous substrate according to claim 27, wherein the fourth antioxidant comprises a phosphorus-based antioxidant, a sulfur-based antioxidant, or a mixture thereof.

38. The method for manufacturing the crosslinked structure-containing polyolefin porous substrate according to claim 34 or 36, wherein the phenolic antioxidant comprises 2,6-di-t-butyl-4-methylphenol, 4,4'-thiobis(2-t-butyl-5-methylphenol), 2,2'-thiodiethylbis[3-(3,5-di-t-butyl-4-hydroxyphenyl)propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,SH)-trione, dioctadecyl 3,3'-thiodipropionate, or two or more of them.

39. The method for manufacturing the crosslinked structure-containing polyolefin porous substrate according to claim 35 or 37, wherein the phosphorus-based antioxidant comprises 3,9-bis(2,6-di-t-butyl-4-methylphenoxy)-2,4,8, 10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

40. The method for manufacturing the crosslinked structure-containing polyolefin porous substrate according to claim 35 or 37, wherein the sulfur-based antioxidant comprises 3,3'-thiobis-1,1'-didodecyl ester, dimethyl 3,3'-thiodipropionate, dioctadecyl 3,3'-thiodipropionate, 2,2-bis{[3-(dodecylthio)-1-oxopropoxy]methyl}propane-1,3-diyl bis[3-(dodecylthio)propionate], or two or more of them.

41. The method for manufacturing the crosslinked structure-containing polyolefin porous substrate according to claim 20, wherein the UV rays are irradiated at an irradiation light dose of 10-1000 mJ/cm$^2$.

42. A lithium secondary battery comprising a positive electrode, a negative electrode and a separator interposed between the positive electrode and the negative electrode, wherein the separator is the crosslinked structure-containing separator for a lithium secondary battery as defined in claim 15.

FIG. 1

<u>1A</u>

20A

10A

FIG. 2

|  | Ex. 3 | Ex. 4 | Ex. 5 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Content of antioxidant of first polyolefin composition (based on 30 parts by weight of polyolefin) | - | 0.03/ 0.03 | 0.03/ 0.03 | - | 0.03/ 0.03 | - | 0.03/ 0.03 | 0.3/ 0.18 | - |
| Content of antioxidant of second polyolefin composition (based on 30 parts by weight of polyolefin) | 0.15/ 0.09 | 0.15/ 0.09 | 0.3/ 0.18 | - | 0.03/ 0.03 | - | 0.03/ 0.03 | 0.3/ 0.18 | 0.03/ 0.03 |

FIG. 3

|  |  | Example 1 | Example 2 |
|---|---|---|---|
| Content of crosslinking additive | | ITX 0.1 wt% | ITX 0.1 wt% |
| UV irradiation condition (mJ/cm$^2$) | | 500 | 500 |
| Thickness (μm) | | 9.0 | 9.0 |
| Air permeability (s/100 mL) | | 85 | 85 |
| Porosity (%) | | 48 | 48 |
| Puncture strength (gf/15 mm) | | 335 | 330 |
| Crosslinking degree (%) | One surface 3 μm | 45 | 28 |
| | The other surface 3 μm | 4 | 6 |
| Shutdown temperature (°C) | | 146 | 145 |
| Meltdown temperature (°C) | | 200 | 195 |

FIG. 4

| | | Ex. 3 | Ex. 4 | Ex. 5 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|
| Content of crosslinking additive | | ITX 0.1 wt% | ITX 0.1 wt% | ITX 0.1 wt% | - | - | ITX 0.1 wt% | ITX 0.1 wt% | ITX 0.1 wt% | - |
| UV irradiation condition (mJ/cm$^2$) | | 500 | 500 | 500 | - | - | 500 | 500 | 500 | - |
| Thickness (μm) | | 9.0 | 9.0 | 9.0 | 9.0 | 9.0 | 9.0 | 9.0 | 9.0 | 9.0 |
| Air permeability (s/100 mL) | | 85 | 85 | 85 | 85 | 85 | 85 | 85 | 85 | 88 |
| Porosity (%) | | 48 | 48 | 48 | 48 | 48 | 48 | 48 | 48 | 48 |
| Puncture strength (gf/15 mm) | | 330 | 335 | 330 | 350 | 340 | 310 | 310 | 345 | 280 |
| Crosslinking degree (%) | First region | 39 | 30 | 32 | 0 | 0 | 43 | 68 | 8 | 40 |
| | Second region | 6 | 8 | 3 | 0 | 0 | 40 | 60 | 4 | 0 |
| | Third region | 39 | 30 | 32 | 0 | 0 | 43 | 68 | 8 | 40 |
| Shutdown temperature (°C) | | 145 | 146 | 145 | 145 | 145 | 150 | 150 | 147 | 144 |
| Meltdown temperature (°C) | | 190 | 198 | 197 | 148 | 148 | 199 | >200 | 153 | 180 |

## INTERNATIONAL SEARCH REPORT

| International application No. |
|---|
| **PCT/KR2021/019349** |

| | |
|---|---|
| **A.** | **CLASSIFICATION OF SUBJECT MATTER** |

**H01M 50/454**(2021.01)i; **H01M 50/457**(2021.01)i; **H01M 50/417**(2021.01)i; **H01M 50/403**(2021.01)i; **H01M 10/052**(2010.01)i; **B29C 48/21**(2019.01)i; **B29C 48/00**(2019.01)i; **B29C 48/08**(2019.01)i; **B29C 67/20**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 50/454(2021.01); B32B 27/00(2006.01); C09J 7/20(2018.01); H01G 9/02(2006.01); H01M 10/052(2010.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가교(cross linking), 폴리올레핀(polyolefin), 다층(multilayer), 다공성(porous), 기재(substrate), 분리막(separator), 필러(filler), 바인더(binder), 접착층(adhesive layer)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2019-0082211 A (SEKISUI CHEMICAL CO., LTD.) 09 July 2019 (2019-07-09)<br>See paragraphs [0109]-[0181], claim 14 and figure 2. | 1,3-8,14 |
| Y | | 2,9-13,15-19,42 |
| A | | 20-41 |
| Y | JP 3828577 B2 (CRYOVAC INC.) 04 October 2006 (2006-10-04)<br>See page 19, lines 43-48 and page 27, line 10, claims 8, 30 and 32 and figure 4. | 2,9-13 |
| Y | JP 2017-050149 A (ASAHI KASEI CORP.) 09 March 2017 (2017-03-09)<br>See claims 1 and 21. | 15-19,42 |
| A | KR 10-2016-0129580 A (LG CHEM, LTD.) 09 November 2016 (2016-11-09)<br>See claims 1-2. | 1-42 |

| | | | |
|---|---|---|---|
| ✓ Further documents are listed in the continuation of Box C. | | ✓ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 March 2022** | **30 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 250 460 A1

**INTERNATIONAL SEARCH REPORT**

International application No.

**PCT/KR2021/019349**

## C. DOCUMENTS CONSIDERED TO BE RELEVANT

| Category* | Citation of document, with indication, where appropriate, of the relevant passages | Relevant to claim No. |
|---|---|---|
| A | KR 10-1792681 B1 (SAMSUNG SDI CO., LTD. et al.) 02 November 2017 (2017-11-02)<br>See claims 1 and 14. | 1-42 |

Form PCT/ISA/210 (second sheet) (July 2019)

44

**EP 4 250 460 A1**

### INTERNATIONAL SEARCH REPORT
#### Information on patent family members

International application No.

**PCT/KR2021/019349**

| Patent document cited in search report | | | Publication date (day/month/year) | Patent family member(s) | | | Publication date (day/month/year) |
|---|---|---|---|---|---|---|---|
| KR | 10-2019-0082211 | A | 09 July 2019 | CN | 109890886 | A | 14 June 2019 |
| | | | | WO | 2018-084318 | A1 | 11 May 2018 |
| JP | 3828577 | B2 | 04 October 2006 | AT | 270962 | T | 15 July 2004 |
| | | | | AT | 431244 | T | 15 May 2009 |
| | | | | AU | 1997-43621 | B2 | 27 July 2000 |
| | | | | AU | 4362197 | A | 22 October 1997 |
| | | | | AU | 722248 | B2 | 27 July 2000 |
| | | | | BR | 9708408 | A | 03 August 1999 |
| | | | | CA | 2250254 | A1 | 09 October 1997 |
| | | | | DE | 69729856 | T2 | 16 March 2006 |
| | | | | EP | 0889780 | A1 | 13 January 1999 |
| | | | | EP | 0889780 | B1 | 14 July 2004 |
| | | | | EP | 1346824 | A2 | 24 September 2003 |
| | | | | EP | 1346824 | A3 | 15 December 2004 |
| | | | | EP | 1346824 | B1 | 13 May 2009 |
| | | | | JP | 2002-504029 | A | 05 February 2002 |
| | | | | KR | 10-0486011 | B1 | 27 September 2005 |
| | | | | MY | 119078 | A | 31 March 2005 |
| | | | | NZ | 331862 | A | 28 February 2000 |
| | | | | US | 5993922 | A | 30 November 1999 |
| | | | | WO | 97-36741 | A1 | 09 October 1997 |
| JP | 2017-050149 | A | 09 March 2017 | JP | 6692619 | B2 | 13 May 2020 |
| KR | 10-2016-0129580 | A | 09 November 2016 | None | | | |
| KR | 10-1792681 | B1 | 02 November 2017 | US | 10305081 | B2 | 28 May 2019 |
| | | | | US | 2017-0133654 | A1 | 11 May 2017 |

Form PCT/ISA/210 (patent family annex) (July 2019)

**REFERENCES CITED IN THE DESCRIPTION**

**Patent documents cited in the description**

- KR 1020200177908